# EUROPÄISCHE PATENTSCHRIFT

(11) **EP 0 754 357 B1**
(45) Veröffentlichungstag und Bekanntmachung des Hinweises auf die Patenterteilung: **13.01.1999**
(21) Anmeldenummer: 95915842.9
(22) Anmeldetag: 04.04.1995
(51) Int. Cl.: H01R 13/115

(54) **VERBINDUNGSSYSTEM FÜR ELEKTRISCHE LEITER**
CONNECTION SYSTEM FOR ELECTRICAL CONDUCTORS
SYSTEME DE CONNEXION POUR CONDUCTEURS ELECTRIQUES

(30) Priorität: 06.04.1994 DE 4411784
(43) Veröffentlichungstag der Anmeldung: 22.01.1997
(73) Patentinhaber: KARL PFISTERER ELEKTROTECHNISCHE SPEZIALARTIKEL GMBH & CO. KG, 70327 Stuttgart (DE)
(72) Erfinder: GOTTSCHALK, Klaus, D-70806 Kornwestheim (DE); DEISTER, Paul, F., D-74336 Brackenheim (DE); KELLER, Hans-Joachim, D-73312 Geislingen-Weiler (DE); MOSER, Bernd, D-75180 Pforzheim (DE); SOBIERAY, Günther, D-70839 Gerlingen (DE)
(74) Vertreter: Patentanwälte Bartels und Partner
(86) Internationale Anmeldenummer: EP9501226
(87) Internationale Veröffentlichungsnummer: WO9528019

(56) Entgegenhaltungen:
- EP-A- 0 352 967
- DE-A- 1 490 668
- FR-A- 821 722
- FR-A- 2 578 362
- US-A- 4 431 256
- US-A- 5 199 910

## Beschreibung

Die Erfindung betrifft ein Verbindungssystem für elektrische Leiter, insbesondere isolierte, an elektrische Geräte anzuschließende Kabel, das die Merkmale des Oberbegriffs des Anspruches 1 aufweist.

Die bekannten Steckverbindungssysteme dieser Art aus dem Mittelspannungs- und Hochspannungsbereich erfüllen in verschiedener Hinsicht nicht die Erfordernisse, welche an Verbindungen im mobilen Einsatz, insbesondere beim Anschluß von Kabeln an die Komponenten eines Elektroantriebes für Fahrzeuge gestellt werden. Aber auch im stationären Einsatz bleiben Wünsche offen.

Aus dem Elektronikbereich sind Steckverbindungen bekannt, die sich auch bei Vibrationen bis zu einer gewissen Stärke nicht lösen. Dies wird durch eine Ausbildung der Buchse mit einem die mechanische Verbindung verbessernden und mit einem die elektrische Verbindung verbessernden Teil erreicht. In der US 4 431 256 ist dies durch eine Führung für den Bolzen an der Öffnung der Buchse und durch ein Mehrlinienkontaktelement im Inneren der Buchse verwirklicht. In der EP 0 352 967 A1 ist eine Ausführung der Buchse offenbart mit zwei Teilen unterschiedlichen Durchmessers, von denen der eine Erhebungen in Längsrichtung und der andere solche in Umfangsrichtung aufweist.

Eine andere Variante wird in der US 5 199 910 und der FR 2 578 362 offenbart. Während Mehrlinienkontakte die elektrische Verbindung verbessern, wird die mechanische Verbindung dadurch verstärkt, daß ein Gehäuse vorgesehen ist, welches mehrere Bolzen umschließt, und ein Gehäuse, das mehrere Buchsen beinhaltet, wobei die beiden Gehäuse ineinander steckbar sind und durch eine Clip-Verbindung verrastet werden können. All diesen Lösungen auf dem elektronischen Gebiet ist aber gemein, daß sie nicht auf den Bereich hoher Ströme durch eine einfache Vergrößerung der Abmessungen übertragbar sind.

Der Erfindung liegt daher die Aufgabe zugrunde, ein gegenüber diesen bekannten Systemen verbessertes Verbindungssystem zu schaffen, das insbesondere auch über lange Zeiträume hinweg hohe Ströme zuverlässig zu übertragen vermag. Diese Aufgabe löst ein Verbindungssystem mit den Merkmalen des Anspruches 1.

Außer einer hohen Strombelastbarkeit dank der je einen Linienkontakt bildenden Materialpartien der radial federnden Zungen, die zumindest so groß ist wie diejenige von Steckverbindungen mit sogenannten Lamellenkontaktelementen, weist die erfindungsgemäße Lösung den Vorteil auf, im Gegensatz zu den Steckverbindungen mit Lamellenkontaktelementen große Maßtoleranzen ohne Beeinträchtigung der Strombelastbarkeit ausgleichen zu können. Weiterhin ist eine sichere Kontaktgabe auch nach einer großen Anzahl von Trennungen und Verbindungen gewährleistet.

Durch eine Anordnung jedes vorgesehenen Bolzens in einem ersten elektrisch isolierenden Gehäuse und jeder vorgesehenen Buchse in einem zweiten elektrisch isolierenden Gehäuse, welche bei Herstellung der Steckverbindung ineinander gesteckt werden, wird das Kontaktsystem vor verschiedenen Einflüssen geschützt. Im ineinandergesteckten Zustand stützen die beiden starren

Gehäuse sich gegenseitig ab, wodurch von außen her auf die Steckverbindung einwirkende Kräfte vom Kontaktsystem ferngehalten werden. Da in der Regel das Kontaktsystem nicht nur gegen äußere Krafteinflüsse, sondern auch gegen sonstige äußere Einflüsse geschützt werden muß, kann vorgesehen sein, daß die beiden Gehäuse im ineinandergesteckten Zustand fluiddicht miteinander verbunden sind. Außerdem ist es bei höheren Betriebsspannungen zweckmäßig, auch eine elektrisch dichte Verbindung zwischen den beiden ineinandergesteckten Gehäusen vorzusehen. Dies wird beispielsweise durch ein geringes Spiel zwischen den Gehäusen verwirklicht.

Man kann schon bei relativ geringen Abmessungen das Verbindungssystem für verhältnismäßig hohe Spannungen verwendbar machen. Beispielsweise lassen sich Betriebsspannungen bis zu 6 kV ohne Schwierigkeiten realisieren. Dies gilt vor allem dann, wenn man das die Buchse enthaltende Gehäuse über nahezu die gesamte Länge des den Bolzen enthaltenden Gehäuses in letzteres einsteckbar ausbildet, um sehr lange Kriechstrecken zu realisieren. Zusätzlich kann ein gesondertes Dichtungselement vorgesehen sein, beispielsweise im Bereich des freien Endes des den Bolzen umgebenden Gehäuses.

Erfindungsgemäß sind die radial nach innen vorspringenden Materialpartien durch die Längsränder der Zungen gebildet, weil die hierzu erforderliche Bearbeitung der Zungen äußerst gering ist, was auch die Kosten senkt. Man braucht nämlich den Krümmungsradius der Zungen nur etwas kleiner zu wählen, als den Krümmungsradius der zugehörigen Buchse.

Vorzugsweise sind an die Zungen nach außen überstehende Vorsprünge angeformt, welche eine die Buchse im Bereich der Zungen umfassende Feder mit radial nach innen gerichteter Federkraft gegen eine axiale Verschiebung sichern. Auch diese Maßnahme trägt dazu bei, die Kosten des Kontaktsystemes sehr gering zu halten.

Das erfindungsgemäße Verbindungssystem ist rüttelfest, was vor allem bei einem mobilen Einsatz in der Regel unerläßlich ist, es ist ferner temperaturfest und chemikalienfest und erfüllt zumindest die Anforderungen der Schutzart IP66. Es vermag deshalb alle üblicherweise auftretenden Anforderungen in vollem Umfang zu erfüllen. Außerdem ist es sehr raumsparend. Ein wesentlicher Vorteil besteht schließlich darin, daß es sich kostengünstig herstellen läßt. Hierzu trägt auch ein modularer Aufbau bei, durch den die Zahl der unterschiedlichen Einzelteile gering gehalten wird.

Das erfindungsgemäße Verbindungssystem umfaßt nicht nur einpolige Steckverbindungen, sondern auch mehrpolige Steckverbindungen. Bei mehrphasigen Systemen wird es sogar in der Regel vorteilhafter sein, zumindest geräteseitig einen mehrpoligen Stecker vorzusehen. Aber auch kabelseitig können mehrpolige Stecker mit Vorteil verwendet werden. Während bei mehrpoligen Stekkern bereits durch die gegenseitige Anordnung der einzelnen Gehäuse sichergestellt werden kann, daß nur eine phasenrichtige Verbindung möglich ist, bedarf es hierzu bei einpoligen Steckern einer Kodierung. Bei einer bevorzugten Ausführungsform ist deshalb das die Buchse enthaltende Gehäuse auf seiner Außenseite mit einer Kodierung, beispielsweise in Form von Längsnuten, versehen, welche auf korrespondierende Vorsprünge des Gehäuses des Steckers ausgerichtet sein müssen, um die beiden Gehäuse ineinanderstecken zu können. Schon mit zwei derartigen Längsnuten, die um unterschiedliche Winkel in Umfangsrichtung gegeneinander versetzt sind, kann eine ausreichend große Anzahl von Kodierungen realisiert werden. Selbstverständlich kommen aber auch andere Kodierungssysteme in Frage.

Die Entscheidung, ob ein Kabelstecker einpolig oder mehrpolig ausgeführt wird, hängt auch von der aufzubringenden Betätigungskraft ab. Eine einpolige Ausführung erfordert prinzipiell eine geringere Betätigungskraft als eine mehrpolige Ausführung. Eine geringe Betätigungskraft kann vor allem dann von Vorteil sein, wenn sehr hohe Anforderungen an den Schutz gegen äußere Einflüsse und insbesondere gegen das Eindringen von Feuchtigkeit erfüllt werden müssen, insbesondere ein Schutz gegen Strahlwasser oder sogar Druckwasser verlangt wird, weil dann die Dichtungen eine entsprechend höhere Druckbelastung erfordern.

Das erfindungsgemäße Verbindungssystem läßt sich wahlweise als gerade und als abgewinkelte Steckverbindung ausführen.

Im folgenden ist die Erfindung anhand von in der Zeichnung dargestellten Ausführungsbeispielen im einzelnen erläutert. Es zeigen
- Fig. 1: einen Längsschnitt eines ersten Ausführungsbeispiels in Form einer geraden Steckverbindung,
- Fig. 2: eine Draufsicht auf eine Platine zur Bildung einer Kontaktbuchse,
- Fig. 3: einen vergrößert dargestellten Querschnitt durch die aus der Platine gemäß Fig. 2 gebildete Kontaktbuchse,
- Fig. 4: eine unvollständig dargestellte Frontansicht eines Elektromotors mit Kabelanschlüssen entsprechend dem Ausführungsbeispiel gemäß Fig. 1,
- Fig. 5: einen Schnitt nach der Linie V-V der Fig. 4,
- Fig. 6: einen Schnitt nach der Linie VI-VI der Fig. 4,
- Fig. 7: einen Schnitt nach der Linie VII-VII der Fig. 4,
- Fig. 8: einen Schnitt entsprechend Fig. 5, jedoch ohne Stecker, eines abgewandelten Ausführungsbeispiels,
- Fig. 9: einen Längsschnitt eines Ausführungsbeispiels mit zwei mehrpoligen Steckerkomponenten,
- Fig.10: eine teils in Längsrichtung geschnitten dargestellte Seitenansicht des Ausführungsbeispiels gemäß Fig. 9,
- Fig.11: eine Draufsicht auf das Ausführungsbeispiel gemäß Fig. 9,
- Fig.12: eine schematisch dargestellte Seitenansicht eines dreipoligen Steckers auf der Basis des Ausführungsbeispiels gemäß Fig.1,
- Fig.13: eine schematisch dargestellte Seitenansicht einer dem Stecker gemäß Fig. 18 zugeordneten Steckdose,
- Fig.14: eine Draufsicht auf die Steckdose gemäß Fig.13,
- Fig.15: eine vergrößert und zur Hälfte in Längsrichtung geschnitten dargestellte Seitenansicht eines zweiten Ausführungsbeispiels eines einpoligen Verbinders,
- Fig.16: eine Seitenansicht des Ausführungsbeispiels gemäß Fig. 15 und den geschnitten dargestellten Teil eines elektrischen Gerätes,
- Fig.17: eine Seitenansicht des Ausführungsbeispiels gemäß Fig.15 in einer um 90° gedrehten Lage,
- Fig.18: eine Seitenansicht entsprechend Fig.16 eines geringfügig abgewandelten Ausführungsbeispiels,
- Fig.19: eine Seitenansicht des die Buchse enthaltenden Gehäuses des Ausführungsbeispiels gemäß Fig. 15,
- Fig.20: eine Seitenansicht des den Bolzen enthaltenden Gehäuses des Ausführungsbeispiels gemäß Fig. 15,
- Fig.21: eine Seitenansicht der Kappe des Ausführungsbeispiels gemäß Fig.18,
- Fig.22: einen vergrößert dargestellten Querschnitt des Sicherungsringes des Ausführungsbeispiels gemäß Fig.15,
- Fig.23: eine vergrößert dargestellte Stirnansicht des Gehäuses gemäß Fig.19 mit einer ersten Kodierung,
- Fig.24: eine Stirnansicht gemäß Fig. 23 des Gehäuses gemäß Fig.19 mit einer zweiten Kodierung,
- Fig.25: einen Längsschnitt der Buchse eines einpoligen Winkelsteckers,
- Fig.26: einen Längsschnitt dieses Winkelsteckers mit einer Buchse gemäß Fig.25,
- Fig.27: einen Längsschnitt entsprechend Fig.26 eines gegenüber dem Winkelstecker gemäß Fig.26 geringfügig abgewandelten Winkelsteckers,
- Fig.28: eine Draufsicht auf die Innenseite der beiden über ein Filmscharnier zusammenhängenden Hälften des Gehäuses des Winkelsteckers gemäß Fig.27,
- Fig.29: einen Schnitt nach der Linie XXIX-XXIX der Fig.28,
- Fig.30: eine erste Seitenansicht des Gehäuses des Winkelsteckers gemäß Fig.27,
- Fig.31: eine zweite Seitenansicht des Gehäuses des Winkelsteckers gemäß Fig.27,
- Fig.32: eine Seitenansicht entsprechend Fig.30 einer Abwandlung des in Fig.30 dargestellten Gehäuses,
- Fig.33: eine Ansicht des den Bolzen enthaltenden Winkelgehäuses eines einpoligen Steckverbinders,
- Fig.34: eine Draufsicht auf die Unterseite des Gehäuses gemäß Fig.33,
- Fig.35: einen Längsschnitt des Gehäuses gemäß Fig.33,
- Fig.36: einen teils in Seitenansicht, teils in Längsrichtung geschnitten dargestellten, aus einpoligen Teilen gebildeten dreipoligen Steckverbinders,
- Fig.37: eine Seitenansicht eines dreipoligen Steckbuchsenteils,
- Fig.38: einen Schnitt nach der Linie XXXVIII-XXXVIII der Fig.37,
- Fig.39: eine Draufsicht auf die Frontseite des Steckbuchsenteils gemäß Fig.37,
- Fig.40: eine Ansicht eines vierpoligen Gerätesteckbuchsenteils,
- Fig.41: eine Draufsicht auf die Stirnseite des Gerätesteckbuchsenteils gemäß Fig.40,
- Fig.42: eine teils in Längsrichtung geschnitten, teils in Seitenansicht dargestellte, einphasige Vorrichtung zum Verbinden mehrerer Kabel miteinander.

Bei allen im folgenden beschriebenen Ausführungsbeispielen handelt es sich um Steckverbindungen zwischen isolierten Kabeln und den Komponenten eines Elektroantriebs für Fahrzeuge, wobei mittels der Kabel die Batterie mit einem Umrichter und dieser mit dem Bordnetz sowie dem Elektromotor verbunden werden. Das erfindungsgemäße Verbindungssystem ist aber auch bestens für einen stationären Einsatz, beispielsweise für Kabelverbindungen mit einem stationären Umrichter, geeignet und kann auch überall dort eingesetzt werden, wo ähnliche Anforderungen oder ähnliche Teilanforderungen gestellt werden.

Die Betriebsspannung liegt bei 1 kV, die maximale Stromstärke unter 1 kA. Aber auch höhere Betriebsspannungen bis zu 6 kV lassen sich beherrschen.

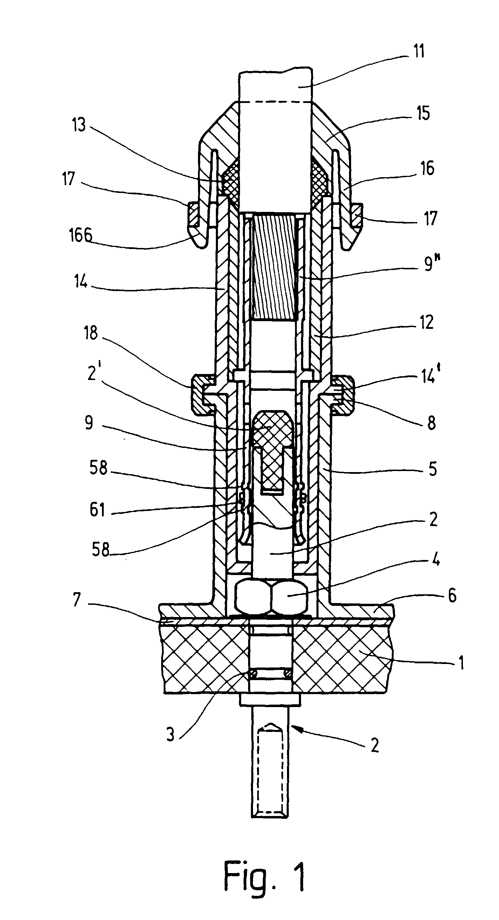

Das in Fig.1 dargestellte Ausführungsbeispiel weist einen durch eine Bohrung in einer Wand 1 des Gehäuses eines Elektromotors hindurchgeführten Kontaktstift 2 auf.

Sofern die Wand 1 im Bereich der Bohrung nicht wie im Ausführungsbeispiel aus einem elektrisch isolierenden Material besteht, ist für eine Isolierung des Kontaktstiftes 2 gegenüber der Wand 1 Sorge zu tragen. Der die Wand 1 durchdringende Mittelabschnitt des Kontaktstiftes 2 ist mit einer Ringnut versehen, in welcher zur Bildung einer Dichtung ein O-Ring 3 liegt.

Der in das Innere des Motorgehäuses ragende Endabschnitt des Kontaktstiftes 2 ist als Preßhülse für eine Sechskantverpressung ausgebildet.

Gegen eine axiale Verschiebung ist der Kontaktstift 2 durch einen an der Innenseite der Wand 1 anliegenden Bund und eine unter Zwischenlage einer Unterlegscheibe sich an der Außenseite der Wand 1 abstützende Mutter 4 gesichert.

Den außen über die Wand 1 überstehenden Teil des Kontaktstiftes 2 umgibt im Abstand ein konzentrisch zu ihm angeordnetes, rohrförmiges Gehäuse 5 aus Kunststoff, das für eine Verbindung mit der Wand 1 einen Ringflansch 6 aufweist, den nicht dargestellte Schrauben unter Zwischenlage einer Dichtung 7 an die Wand 1 anpressen. Zwischen dem Ringflansch und der Wand ist deshalb eine mechanisch feste, fluiddichte und elektrisch dichte Verbindung vorhanden. Das von der Wand 1 wegweisende Ende des Gehäuses 5 ist ebenfalls mit einem Ringflansch 8 versehen, der aber nur wenig über das Gehäuse 5 radial nach außen übersteht.

Der freie Endabschnitt 2' des Kontaktstiftes 2 besteht aus einem elektrisch isolierenden Material, wobei im Ausführungsbeispiel der den Endabschnitt 2' bildende Körper einen zentralen Zapfen hat, der in einer zentralen Sacklochbohrung des Kontaktstiftes 2 festgelegt ist. Da der Ringspalt zwischen dem Endabschnitt 2' und dem ihn umgebenden Gehäuse 5 so gering ist, daß der Finger einer Person nicht hindurchgeführt werden kann, ist der sich an den Endabschnitt 2' anschließende Teil des Kontaktstiftes 2 berührungssicher unter Einhaltung der Anforderungen gemäß Schutzklasse IP 2X abgedeckt..

Auf den Kontaktstift 2 ist eine Kontaktbuchse 9 aufsteckbar, deren einer Endabschnitt, welcher den aus Kontaktmaterial bestehenden Abschnitt des Kontaktstiftes 2 aufnimmt, aus radial federnden, sich in Längsrichtung der Kontaktbuchse 9 erstreckenden Kontaktzungen 9' besteht, die alle gleich ausgebildet und durch je einen Schlitz 57 gleicher Größe voneinander getrennt sind. Der andere Endabschnitt der Kontaktbuchse 9 ist als Preßhülse 9" ausgebildet. Durch eine Sechskantverpressung wird eine mechanische und elektrisch hochwertige Verbindung zwischen der Preßhülse 9" und dem in ihr liegenden Endabschnitt der Seele eines isolierten Kabels 11 hergestellt. Selbstverständlich könnte aber auch eine andere hochwertige Verbindung vorgesehen sein.

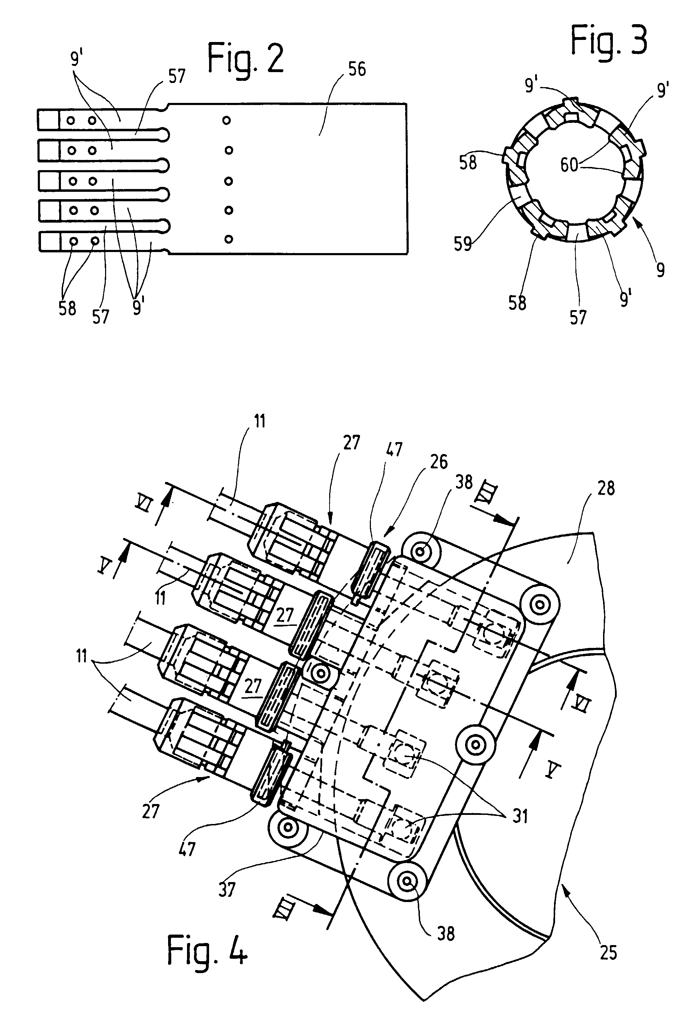

Hergestellt wird die Kontaktbuchse 9 aus einer rechteckigen Platine 56, wie sie in Fig.2 dargestellt ist. Die Platine 56 ist mit Schlitzen 57 zur Bildung der parallel zueinander verlaufenden Kontaktzungen 9' versehen, die alle gleich ausgebildet sind. Noch ehe die Platine 56 zu einem hohlzylindrischen Körper verformt wird, werden die Kontaktzungen 9' mit zwei über ihre Außenseite überstehenden Vorsprüngen 58 versehen. Außerdem wird das freie Ende der Kontaktzungen 9' abgerundet nach außen gebogen und den Kontaktzungen 9' eine Krümmung in Querrichtung gegeben, deren Krümmungsradius im Bereich der nach der Fertigstellung innenliegenden Kontaktseite kleiner ist als der Krümmungsradius der Innenseite des die Kontaktzungen 9' tragenden zylindrischen Mittelabschnittes der Kontaktbuchse 9, so daß die Randzonen 60 der Kontaktzungen 9 radial nach innen über die zwischen den Randzonen 60 liegende Mittelzone vorspringen. Deshalb bildet jede Kontaktzunge 9' mit ihren beiden Randzonen 60 zwei Linienkontakte. Nachdem die in der vorstehenden Weise bearbeitete, ein Stanz-Biegeteil darstellende Platine zu einem hohlzylindrischen Körper gerollt worden ist, wird um die Kontaktzungen 9' im Bereich zwischen deren Vorsprüngen 58 eine Feder 61 gelegt, welche für den gewünschten Kontaktdruck zwischen den Randzonen 60 der Kontaktzungen 9' und dem in die Kontaktbuchse 9 eingeführten Kontaktstift 2 sorgt.

Am Übergang von der Preßhülse 9" zu dem die Kontaktzungen 9' tragenden Mittelabschnitt der Kontaktbuchse 9 ist ein Ringflansch geringer axialer Abmessung vorgesehen, an dem sich ein die Preßhülse 9" konzentrisch umgebendes Stützrohr 12 abstützt, dessen anderes, einen Innenkonus bildendes Ende sich an einem ringförmigen Körper 13 abstützt. Dieser ringförmige Körper 13 liegt an der Isolation des isolierten Kabels 11 auf dessen gesamtem Umfang dicht und haftend an. Andererseits liegt der deformierbare ringförmige Körper 13 an der Innenwand des einen Endabschnittes eines die Kontaktbuchse 9 konzentrisch umgebenden Gehäuses 14 an, das aus isolierendem Kunststoff besteht und sich, wie Fig. 1 zeigt, etwas über das freie Ende der Kontaktbuchse 9 hinaus erstreckt. An diesem Ende weist es einen radial nach innen vorspringenden Flansch auf, der eine Öffnung begrenzt, deren Durchmesser nur wenig größer ist als der Durchmesser des Kontaktstiftes 2. Auch bei sehr hohen Stromstärken kann der Durchmesser des Kontaktstiftes 2 und damit der Durchmesser der Öffnung am freien Ende des Gehäuses 14 so klein gehalten werden, daß eine Berührung der Kontaktbuchse 9 mit dem Finger ausgeschlossen ist, zumal die Kontaktbuchse 9 im Abstand von der Öffnung am freien Ende des Gehäuses 14 endet.

Der Außendurchmesser des Gehäuses 14 ist in demjenigen Abschnitt, der beim Herstellen der Steckverbindung in den vom Gehäuse 5 gebildeten, zylindrischen Kanal eingeführt wird, so gewählt, daß praktisch kein Spiel zwischen dem Gehäuse 14 und dem Gehäuse 5 in diesem Bereich vorhanden ist. Sofern die hierdurch erreichte Abdichtung nicht ausreichen sollte, kann man wenigstens einen O-Ring vorsehen, der in eine nach außen offene Ringnut des in das Gehäuse 5 eingreifenden Abschnittes des Gehäuses 14 eingelassen ist. Zusätzlich oder statt eines solchen O-Rings kann man eine Ringdichtung zwischen dem freien Ende des Gehäuses 5 und einer Schulter des Gehäuses 14 am Übergang von dem in das Gehäuse 5 einführbaren Abschnitt zu dem das Stützrohr 12 umgebenden Abschnitt anordnen.

Damit der ringförmige Körper 13 eine dichte Verbindung zwischen dem Gehäuse 14 und dem isolierten Kabel 11 sowie eine Zugentlastung des Kabels bewirken und aufrechterhalten kann, ist eine aus Kunststoff bestehende Verschlußkappe 15 vorgesehen, welche den am ringförmigen Körper 13 anliegenden Endabschnitt des Gehäuses 14 übergreift und mit einem Innenkonus gegen den ringförmigen Körper 13 drückt. Die Verbindung der Schutzkappe 15 mit dem Gehäuse 14 erfolgt mit zwei diametral angeordneten, radial federnden Rastzungenpaaren 16, welche in diametraler Lage an das Gehäuse 14 angeformte Bügel 17 durchdringen und deren Jochabschitt hintergreifen.

Bei hergestellter Steckverbindung wird das Gehäuse 14 mit dem Gehäuse 5 mittels eines offenen, radial federnden Verbindungsringes 18 verbunden, der eine radial nach innen offene Ringnut aufweist. Diese Ringnut nimmt den am freien Ende des Gehäuses 5 vorhandenen Ringflansch 8 und einen am Gehäuse 14 vorgesehenen Ringflansch 14' gleicher Größe auf und spannt beide gegeneinander. Da der Verbindungsring 18 unter Vorspannung an den Gehäusen 5 und 14 anliegt, ergibt er eine zuverlässige und erschütterungsunempfindliche Verbindung. Statt eines solchen Verbindungsringes 18 könnte beispielsweise auch eine Überwurfmutter mit einem Innengewinde oder einem Bajonettverschluß vorgesehen werden, wobei dann je nachdem, auf welchem der beiden Gehäuse 5 und 14 die Überwurfmutter angeordnet wäre, das andere Gehäuse eine ergänzende Ausbildung haben müßte.

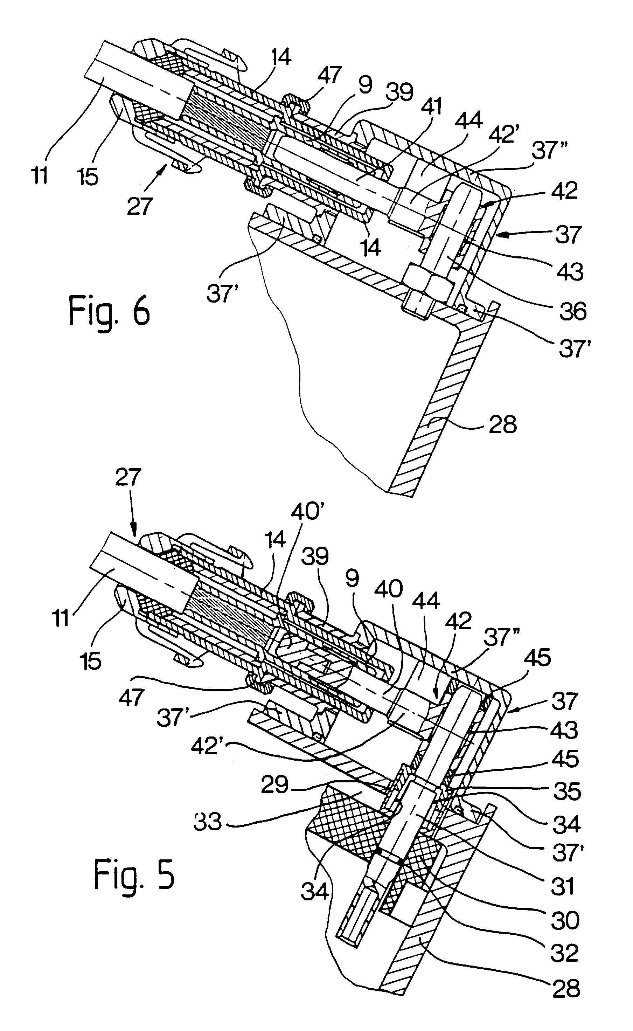

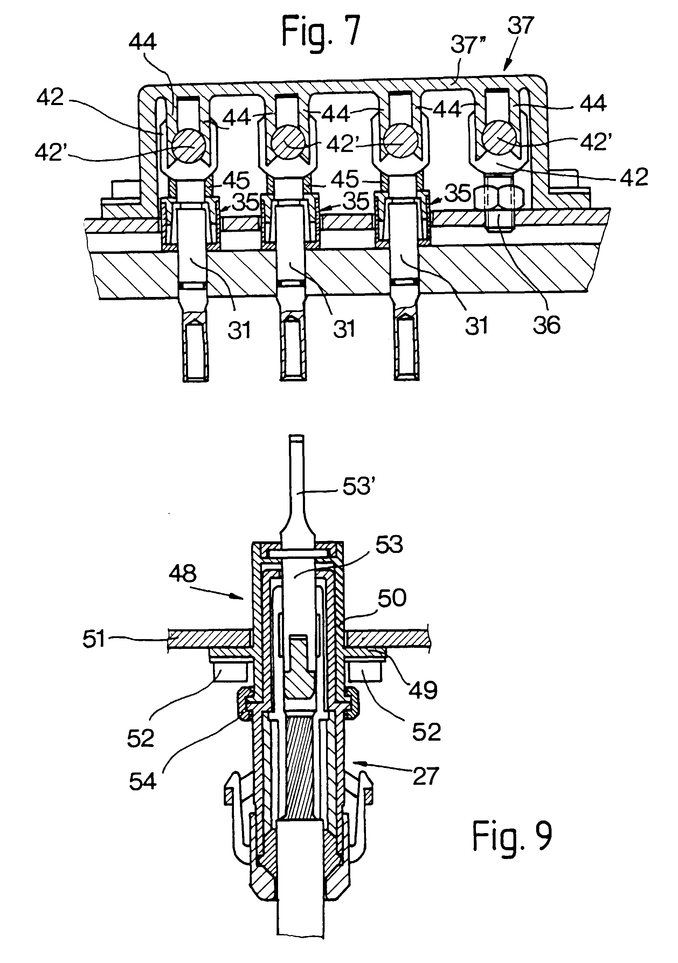

Die Fig. 4 und 7 zeigen in Verbindung mit einem Elektromotor 25, der zum Antrieb eines Fahrzeuges dient, eine Version des erfindungsgemäßen Systems mit Winkelsteckverbindungen. Da es sich bei dem Elektromotor 25 um einen dreiphasigen Drehstrommotor handelt, der von einer Dreieckschaltung auf eine Sternschaltung und umgekehrt umschaltbar sein soll, ist der Anschluß eines Null-Leiters erforderlich. An der einen Stirnseite des Elektromotors 25 ist deshalb eine vierpolige Steckverbindungseinrichtung 26 vorgesehen. Die mit dieser Steckverbindungseinrichtung 26 zu verbindenden Kabelstecker 27 sind alle gleich ausgebildet, und zwar wie der in Fig.1 dargestellte Kabelstecker, der als Kontaktelement die nur schematisch dargestellte Kontaktbuchse 9 aufweist, die sich in dem Gehäuse 14 befindet, das an seiner Rückseite mittels der Verschlußkappe 15 unter Bildung einer zugentlastenden und dichten Verbindung mit dem isolierten Kabel verschlossen ist. Diese Übereinstimmung zeigen die Fig. 5 und 6.

Das metallische Gehäuse 28 des Elektromotors 25 weist, wie Fig.5 zeigt, in seiner einen Stirnwand für die Steckverbindungseinrichtung drei in Umfangsrichtung gegeneinander versetzt angeordnete Durchgangsbohrungen 29 auf, die mit je einer Bohrung in einem Isolierkörper 30 fluchten, der im Gehäuse 28 festgelegt ist. Jede dieser miteinander fluchtenden Bohrungen durchdringt ein Kontaktzapfen 31, dessen in das Innere des Gehäuses 28 ragender Endabschnitt als Preßhülse ausgebildet ist. Der im Isolierkörper 30 liegende Abschnitt ist mit einer Ringnut versehen, in der ein O-Ring 32 liegt, welcher zusammen mit dem Kontaktzapfen 31 die Bohrung des Isolierkörpers 30 dicht verschließt.

Der das Gehäuse 28 durchdringende Abschnitt trägt eine aus Kunststoff bestehende Arretierungshülse 33, die mehrere in radialer Richtung federnde und sich an den Kontaktzapfen 31 anlegende, über dessen Umfang verteilt angeordnete Zungen 34 aufweist, die mit ihrem nach innen abgewinkelten Ende in eine Ringnut des Kontaktzapfens 31 eingreifen. Die Zungen 34 stehen in axialer Richtung von einer vom Kontaktzapfen 31 durchdrungenen Stirnwand der Arretierungshülse ab, an die eine zylindrische, die Zungen 34 konzentrisch im Abstand umgebende Außenwand angeformt ist, welche die gleiche axiale Erstreckung wie die Zungen 34 hat. Zwischen den freien Endabschnitten der Zungen 34 einerseits und der Außenwand andererseits ist eine aus Kunststoff bestehende Sicherungsbuchse 35 eingesteckt, die verhindert, daß die Enden der Zungen 34 aus der sie aufnehmenden Ringnut des Kontaktzapfens 31 austreten können. Die Sicherungsbuchse 35 hat eine ringscheibenförmige Stirnwand, welche an der Stirnfläche der Außenwand und der Zungen 34 der Arretierungshülse 33 anliegt und einen Innendurchmesser hat, der an den Außendurchmesser des Kontaktzapfens 31 angepaßt ist.

Der Kontaktzapfen 31 wird, nachdem das ihm zugeordnete Ende der Statorwicklung des Elektromotors 25 mit seiner Preßhülse verbunden worden ist, von innen nach außen durch den Isolierkörper 30 soweit hindurchgesteckt, bis vom freien Ende des Kontaktzapfens 31 her die Arretierungshülse 33 soweit aufgeschoben werden kann, daß die Zungen 34 in die Ringnut des Kontaktzapfens 31 einrasten und die Stirnwand am Isolierkörper 30 anliegt. Nachdem noch die Sicherungsbuchse 35 zwischen die Zungen 34 und die Außenwand eingeführt worden ist, ist der Kontaktzapfen 31 formschlüssig gegen eine Verschiebung zurück in das Innere des Gehäuses 28 des Elektromotors 25 gesichert. Sofern die Wicklungsenden der Statorwicklung ausreichend lang sind, kann man natürlich auch die Wicklungsenden nach außen führen, dort mit den Kontaktzapfen 31 verbinden und letztere dann von außen her in die Durchgangsbohrungen 29 und den Isolierkörper 30 einführen.

Außer den drei in der vorstehend erläuterten Weise ausgebildeten und, wie Fig.4 zeigt, im gleichen Abstand von der Längsmittelachse des Elektromotors 25 in Umfangsrichtung versetzt angeordneten Kontaktzapfen 31 ist, wie Fig.6 zeigt, für das den Null-Leiter bildende Kabel ein Kontaktzapfen 36 vorgesehen, der den gleichen Außendurchmesser wie die Kontaktzapfen 31 hat und im Ausführungsbeispiel mit gleichem Abstand von der Längsachse des Elektromotors wie die Kontaktzapfen 31 sowie in gleichem Maße wie diese in Umfangsrichtung versetzt angeordnet ist. Das zum Inneren des Gehäuses 28 weisende Ende dieses Kontaktzapfens 36 ist mit einem Gewinde versehen und von außen her in eine Gewindebohrung der Stirnwand des Gehäuses 28 eingeschraubt sowie mit einer Mutter gesichert. Der Überstand über die Außenseite der Stirnwand ist genauso groß wie der Überstand der Kontaktzapfen 31.

Sowohl die Kontaktzapfen 31 als auch der Kontaktzapfen 36 werden von einem kastenförmigen Grundgehäuse 37 der Steckverbindungseinrichtung 26 abgedeckt, das wie alle übrigen Gehäuseteile des Verbindungssystems aus einem chemisch resistenten, formstabilen, elektrisch isolierenden Kunststoff besteht. Das Grundgehäuse 37 weist an seiner offenen Unterseite einen nach außen überstehenden, umlaufenden Flansch 37' auf, der unter Zwischenlage einer umlaufenden, in einer Nut des Grundgehäuses liegenden Dichtung an der Stirnseite des Gehäuses 28 anliegt und mit dieser durch Schrauben 38 mechanisch fest und dicht verbunden ist. Wie die Fig.5 und 6 zeigen, ist nur ein geringer Spalt zwischen dem im Grundgehäuse 37 liegenden Ende der Kontaktzapfen 31 und 36 einerseits und der Stirnwand 37" des Grundgehäuses 37 andererseits vorhanden. Die Kontaktzapfen 31 und 36 sind deshalb durch das Grundgehäuse 37 formschlüssig gegen eine axiale Verschiebung im Sinne einer Vergrößerung des Überstandes über die Stirnwand des Gehäuses 28 gesichert.

Von der radial nach außen weisenden Seitenwand des Grundgehäuses 37 stehen parallel zueinander und in einem dem Abstand zwischen den Kontaktzapfen 31 und 36 entsprechenden Abstand im rechten Winkel zur Längsachse des zugeordneten Kontaktzapfens 31 oder 36 zylindrische Gehäuse 39 aus Kunststoff ab, welche abgesehen von der axialen Länge und der Ausbildung ihres Fußendes wie das Gehäuse 14 ausgebildet sind. Das zylindrische Gehäuse 39 ist kürzer als das Gehäuse 14, und sein Fußende ist in eine Gewindebohrung der Seitenwand des Grundgehäuses 37 eingeschraubt, wobei aneinander anliegende Schulterflächen des Gehäuses 39 und des Grundgehäuses 37 eine dichte Verbindung gewährleisten. Selbstverständlich könnten die Gehäuse 39 aber auch in anderer Weise mit dem Grundgehäuse 37 mechanisch fest und dicht verbunden oder, was vorteilhaft ist, mit diesem einstückig ausgebildet sein.

In der Längsachse jedes der drei Gehäuse 39, die auf einen der Kontaktzapfen 31 ausgerichtet sind, liegt ein Kontaktstift 40, dessen der Kontaktbildung dienender Abschnitt wie der entsprechende Abschnitt des Kontaktstiftes 2 des Ausführungsbeispiels gemäß Fig.1 ausgebildet ist und deshalb auch einen aus elektrisch isolierendem Material bestehenden Endabschnitt 40' aufweist. Dieser Endabschnitt 40', der sich bis zum freien Ende des Gehäuses 39 erstreckt, bildet zusammen mit dem Gehäuse 39 den Berührungsschutz für den Kontaktstift 40. Einen solchen Berührungsschutz benötigt der dem Kontaktzapfen 36 zugeordnete Kontaktstift 41 nicht. Er besteht deshalb bis zu seinem freien Ende, das mit dem freien Ende des ihn umgebenden Gehäuses 39 abschließt, aus Kontaktmaterial. Deshalb würden, wenn die Kabelstecker 27 durch einen vierpoligen Kabelstecker ersetzt oder zu einem solchen miteinander verbunden wären, beim Lösen der Steckverbindung zunächst die den drei Phasen zugeordneten Steckverbindungen gelöst und danach erst die Steckverbindung des Null-Leiters, was aus Sicherheitsgründen erwünscht ist.

Sowohl die Kontaktstifte 40 als auch der Kontaktstift 41 werden von einem T-Stück 42 aus elektrisch gut leitendem Material getragen. Wie die Fig.5 und 6 zeigen, wird der Querteil der gleich ausgebildeten T-Stücke 42 von einer Bohrung durchdrungen, deren Durchmesser nur unwesentlich größer ist als der Außendurchmesser der Kontaktzapfen 31 und 36. Auf halber Länge ist diese Bohrung mit einer Ringnut versehen, in der ein Lamellenkontaktelement 43 liegt, das einen über lange Zeiträume hinweg gleichbleibend guten, hochbelastbaren Viellinienkontakt ergibt. Der im rechten Winkel zum Querteil verlaufende Längsteil 42' des T-Stückes 42 verbindet den Querteil mit dem Kontaktstift mechanisch und elektrisch.

Wie insbesondere Fig.7 zeigt, wird jeder der Längsteile 42' der T-Stücke 42 von zwei Klemmzungen 44 festgehalten, die an die Stirnwand 37" des Grundgehäuses 37 angeformt sind und je eine Klemmhalterung bilden, welche die Kontaktstifte 40 bzw. 41 in einer auf die Längsachse des zugeordneten Gehäuses 39 ausgerichteten Lage halten.

Wie Fig.5 zeigt schließen sich beidseitig an den Querteil derjenigen T-Stücke 42, die auf einen der Kontaktstifte 40 aufgesteckt werden, je ein Zwischenring 45 aus einem elastomeren Material an, welche den Querteil von der Sicherungsbuchse 35 und der Stirnwand 37" des Grundgehäuses 37 distanzieren. Dadurch ist zusätzlich sichergestellt, daß beim Anbringen des Grundgehäuses 37 an das Gehäuse 28 und dem dabei erfolgenden Aufstecken der T-Stücke 42 auf die zugeordneten Kontaktstifte 40 und 41 die T-Stücke 42 und damit die von ihnen getragenen Kontaktstifte 40 und 41 in der richtigen Lage bezüglich der zugeordneten Gehäuse 39 bleiben.

Die Kabelstecker 27 werden, wenn sie vollständig in das zugeordnete Gehäuse 39 eingeführt sind, wobei das freie Ende des Gehäuses 14 des Kabelsteckers 27 in das Grundgehäuse 37 hineinragt, mittels je eines Sicherungsringes 47 gegen ein Lösen gesichert, der wie der Sicherungsring 18 des Ausführungsbeispiels gemäß Fig. 1 ausgebildet ist. Wie die Fig.5 und 6 zeigen, übergreift der Sicherungsring 47 von außen her zwei am freien Ende der Gehäuse 39 bzw. am Gehäuse 14 vorgesehene, schmale Ringflansche und hält dadurch diese in Anlage aneinander.

Sofern erforderlich, kann zwischen diesen beiden Ringflanschen eine Dichtung vorgesehen sein. Ebenso kann man, falls erforderlich, eine Dichtung zwischen der Außenmantelfläche des Gehäuses 14 und der Innenmantelfläche des Gehäuses 39 vorsehen, beispielsweise in Form eines O-Ringes, der in einer Ringnut des Gehäuses 14 liegt.

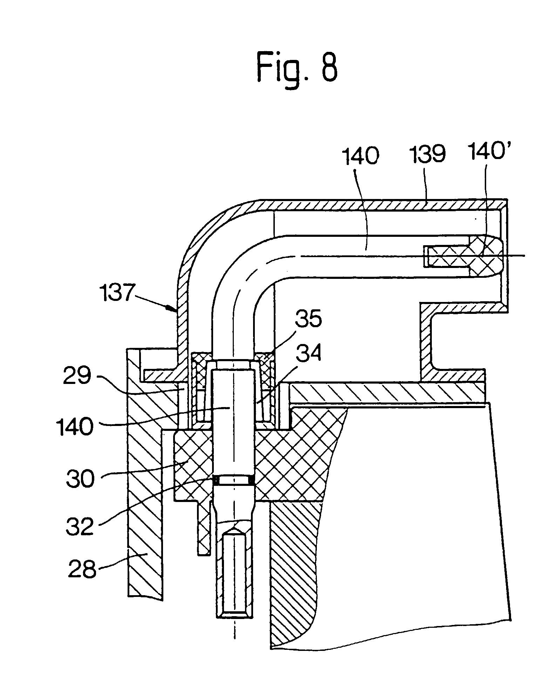

Wenn nicht, wie dies bei dem Ausführungsbeispiel gemäß den Fig.4 bis 7 der Fall ist, die Montagemöglichkeiten es erforderlich machen, bei einem Winkelsteckanschluß den Kontaktstift oder die Kontaktstifte geteilt auszubilden, wird man einer ungeteilten Ausbildung sowohl aus technischen Gründen als auch aus Kostengründen den Vorzug geben. Eine solche ungeteilte Ausbildung zeigt Fig.8.

Der als Ganzes mit 140 bezeichnete Kontaktstift weist einen mit der Statorwicklung zu verbindenden Endabschnitt auf, der wie der Kontaktzapfen 31 des Ausführungsbeispiels gemäß den Fig.4 bis 7 ausgebildet, im Motor festgelegt und abgedichtet ist. Ein viertelkreisbogenförmiger Mittelabschnitt verbindet diesen Endabschnitt mit dem mit der Kontaktbuchse eines Steckers zusammenwirkenden Endabschnitt, der an seinem freien Ende den dem Berührungsschutz dienenden Isolierkörper 140' trägt, der wie der Endabschnitt 40' ausgebildet ist. Bis auf den Isolierkörper 140' ist der Kontaktstift 140 einstückig aus Kontaktmaterial ausgeführt. Falls erforderlich, kann der den Isolierkörper 140' tragende Endabschnitt von zwei Klemmzungen gehalten werden.

Fig.8 zeigt ferner, daß der den Endabschnitt mit dem Isolierkörper 140' konzentrisch im Abstand umgebende Teil 139 des Gehäuses einstückig mit dem Grundgehäuse 137 ausgebildet ist. Wegen weiterer Einzelheiten wird auf die Ausführungen zu den Fig.4 bis 7 Bezug genommen, weil insoweit keine Unterschiede vorhanden sind, weshalb für gleiche Teile gleiche Bezugszahlen verwendet wurden.

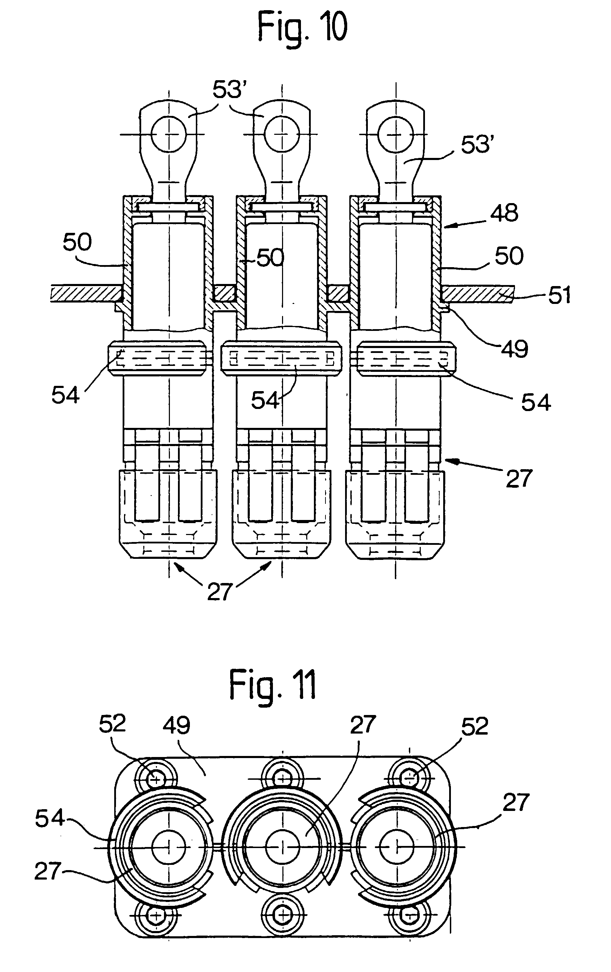

Auch das in den Fig.9 bis 11 dargestellte Ausführungsbeispiel unterscheidet sich, soweit es die Kabelstecker betrifft, nicht von den bereits beschriebenen Ausführungsbeispielen. Deshalb sind auch hier die Kabelstecker mit 27 gekennzeichnet. Abweichend von den Ausführungsbeispielen gemäß den Fig.1 und 4 bis 8 ist die Ausbildung der als Ganzes mit 48 gekennzeichneten Steckverbindungseinrichtung. Letztere weist eine rechteckförmige Grundplatte 49 aus Kunststoff auf, an die, auf ihre Längsmittellinie ausgerichtet, drei zylindrische Gehäuse 50 im Abstand voneinander angeformt sind. Selbstverständlich kann auch eine andere Zahl von Gehäusen 50 vorgesehen sein. Wie die Fig.9 und 10 zeigen, steht ein kürzerer Abschnitt der Gehäuse 50 über die Außenseite und ein längerer Abschnitt über die Innenseite der Grundplatte 49 über, welche an eine Gehäusewand 51 oder dergleichen angelegt und, beispielsweise mittels Schrauben 52, mit dieser fest und, soweit erforderlich, dicht verbunden wird. Die Gehäusewand 51 ist mit Durchtrittsöffnungen für die Gehäuse 50 versehen.

Abgesehen von dem vom Kabelstecker 27 wegweisenden Ende haben die Gehäuse 50 die gleiche Ausbildung wie das Gehäuse 5 des Ausführungsbeispiels gemäß Fig.1, weil in jedes der Gehäuse 50 ohne nennenswertes Spiel der die Kontaktbuchse des Kabelsteckers 27 umgebende Abschnitt des Kabelsteckergehäuses eingeführt wird. Das dem Kabelstecker 27 abgewandte Ende der Gehäuse 50 ist von einem Boden verschlossen, den ein Kontaktstift 53 durchdringt, dessen der Kontaktierung dienende Abschnitt in gleicher Weise wie der Kontaktstift 2 ausgebildet ist. Von letzterem unterscheidet er sich nur dadurch, daß er mit dem Boden des Gehäuses 50 fest verbunden ist und statt einer Preßhülse eine Anschlußlasche 53' mit einer Durchgangsbohrung aufweist. An die Anschlußlasche 53' kann problemlos beispielsweise eine Stromschiene oder ein Kabelschuh angeschlossen werden.

Wegen des relativ geringen Zwischenraumes zwischen den Gehäusen 50 erstrecken sich, wie Fig.11 zeigt, die radial nach außen überstehenden Ringflansche an den miteinander zu verbindenden Gehäusen nicht über den gesamten Umfang. Die Unterbrechung ist bei den beiden äußeren Steckverbindungen auf die mittlere Steckverbindung und bei letzterer auf die eine der beiden Längsseiten der Grundplatte 49 ausgerichtet. Eine noch etwas größere Unterbrechung haben die drei Sicherungsringe 54, welche die Ringflansche übergreifen und zusammenhalten. Die Unterbrechungen der Sicherungsringe 54 haben die gleiche Ausrichtung wie diejenigen der Ringflansche. Hierdurch läßt sich ein sehr geringer Abstand zwischen den Gehäusen 50 und den Kabelsteckern 27 realisieren.

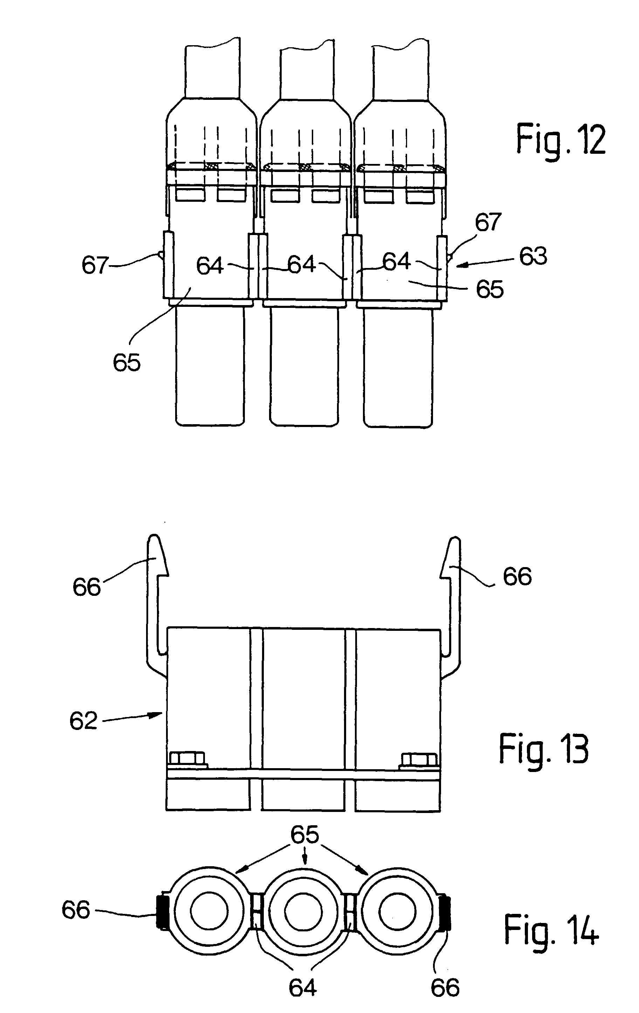

Wie die Fig. 12 bis 14 zeigen, kann man nicht nur die am Gerät vorzusehende Steckverbindungseinrichtung 62 als Baueinheit ausbilden, sondern auch die an den Kabeln vorzusehende Steckverbindungseinrichtung 63. Letztere ist im Ausführungsbeispiel als dreipoliger Stecker ausgebildet, der aus drei durch angeformte Verbindungselemente 64 miteinander verbundene einzelne Kabelstecker 65 zusammengebaut ist, welche im übrigen wie die Kabelstecker 27 der anderen Ausführungsbeispiele ausgebildet sind.

Da die beiden Steckverbindungseinrichtungen 62 und 63 je als Baugruppe ausgebildet sind, kann man zur Verbindung der beiden Baugruppen beispielsweise Rastzungen 66 am einen Bauteil vorsehen, welche mit Rastelementen 67 am anderen Bauteil zusammenwirken.

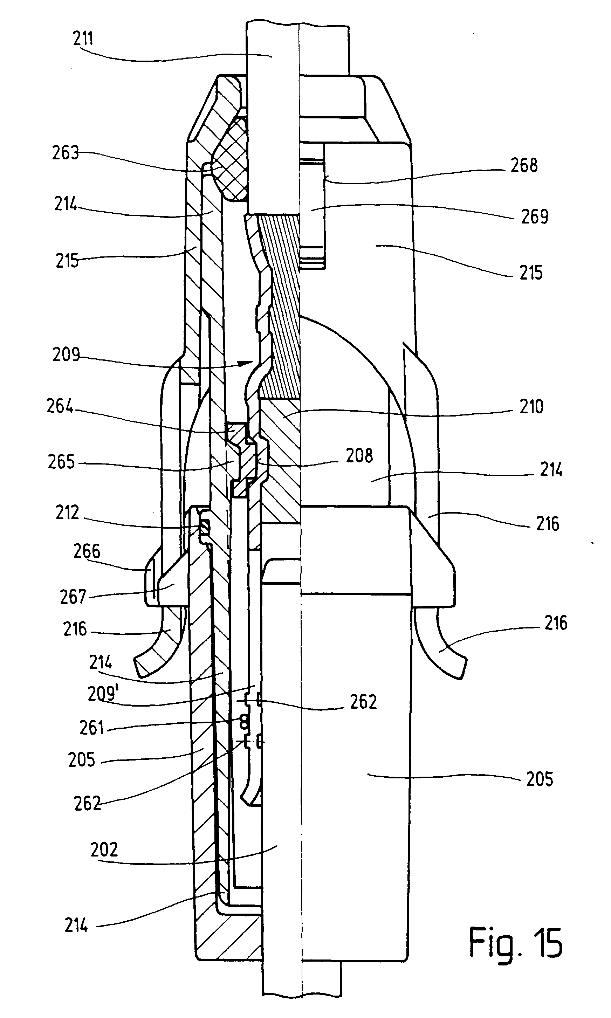

Die Fig.15 bis 17 zeigen ein Ausführungsbeispiel eines einpoligen, erfindungsgemäßen Steckverbinders, das gegenüber dem Ausführungsbeispiel gemäß Fig.1 in verschiedener Hinsicht verbessert ist. Insbesondere sind seine Kosten deutlich geringer als diejenigen des Ausführungsbeispiels gemäß Fig.1, wozu auch die deutlich reduzierte Anzahl der Einzelteile beiträgt.

Ein becherförmiges, aus isolierendem Kunststoff bestehendes erstes Gehäuse 205 für einen als Kontaktstift dienenden, zylindrischen Bolzen 202 ist in seinem Boden mit einer zentralen Öffnung versehen, in welche der Bolzen 202 eingepreßt ist. Letzterer endet im Abstand vom offenen Ende des zylindrischen Gehäuses 205 und kann, wenn ein Berührungsschutz erforderlich ist, einen elektrisch isolierenden Endabschnitt aufweisen, wie dies auch bei dem Kontaktstift 2 des Ausführungsbeispiels gemäß Fig.1 der Fall ist. Der Ringraum zwischen dem Bolzen 202 und der Innenwand des ersten Gehäuses 205 ist so schmal, daß ein Prüffinger nicht eingeführt werden kann.

Dem nur aus dem Bolzen 202 und dem ersten Gehäuse 205 bestehenden Buchsenteil der Steckverbindung ist ein Steckerteil zugeordnet, der am einen Ende eines isolierten Kabels 211 vorgesehen ist. Als Kontaktelement enthält der Steckerteil eine Kontaktbuchse 209, welche wie der Bolzen 202 aus einer Kupferlegierung mit guten Kontakteigenschaften besteht. Zur Verbesserung der Kontakteigenschaften und/oder aus Korrosionsschutzgründen können der Kontaktstift 202 und die Kontaktbuchse 209 verzinnt oder versilbert sein.

Die Kontaktbuchse 209 ist im wesentlichen wie die Kontaktbuchse 9 ausgebildet. Ein Mittelabschnitt der Kontaktbuchse 209, den ein metallischer Einlegeteil 210 ausfüllt, weist eine Sechskantverpressung 208 auf. In den einen Endabschnitt der Kontaktbuchse 209 wird die abisolierte Seele des Kabels 211 bis zur Anlage am Einlegeteil 210 eingeführt. Die Kontaktbuchse 209 stößt dann an die Isolation des Kabels 211 an. Zwei Sechskantverpressungen stellen eine mechanisch feste und elektrisch hochwertige Verbindung zwischen der Seele des Kabels 211 und dem einen Endabschnitt der Kontaktbuchse 209 her. Den anderen Endabschnitt der Kontaktbuchse 209 bilden in Buchsenlängsrichtung verlaufende, gleich ausgebildete und radial federnde Kontaktzungen 209', die gleichmäßig über den Umfang der Kontaktbuchse 209 verteilt und durch je einen Schlitz gleicher Weite voneinander getrennt sind. Obwohl der Endabschnitt des Bolzens 202 sich konisch verjüngt, sind die Kontaktzungen 209' im Bereich ihres freien Endes leicht nach außen zur Bildung eines Trichters gebogen, der das Aufstecken der Kontaktbuchse 209 auf den Bolzen 202 erleichtert. Wie die Kontaktzungen 9' der Kontaktbuchse 9 des Ausführungsbeispiels gemäß den Fig.1 bis 3 haben die Kontaktzungen 209' einen kleineren Krümmungsradius als der Bolzen 202, was dazu führt, daß die beiden seitlichen Randzonen der Kontaktzungen 209' je einen Linienkontakt mit dem Bolzen 202 bilden. Der erforderliche Kontaktdruck wird mit Hilfe einer Feder 261 erzeugt, welche mit mehreren, im Ausführungsbeispiel zwei, Windungen die Kontaktzungen 209' umfaßt und radial nach innen drückt. Je zwei mittig aus jeder Kontaktzunge 209' im Abstand voneinander herausgedrückte Vorsprünge 262 sichern die Feder 261 gegen eine Verschiebung in Zungenlängsrichtung.

Hergestellt wird die Kontaktbuchse 209 aus einer Platine. Zunächst werden die Kontaktzungen 209' freigestanzt und die Vorsprünge 262 geformt. Sodann werden die Endabschnitte der Kontaktzungen 209' gebogen und den Kontaktzungen 209' die Querkrümmung gegeben. Danach wird die ein Stanz-Biegeteil bildende Platine zu einer Hülse gerollt. Die Anzahl der Kontaktzungen 209' und ihre Länge kann entsprechend den Erfordernissen gewählt werden, weshalb auch sehr hohe Strombelastungen erreicht werden können. Dennoch ist das Kontaktsystem robust und insbesondere gegen Abmessungstoleranzen unempfindlich.

Die Kontaktbuchse 209 ist in einem zweiten zylindrischen Gehäuse 214 angeordnet, das aus elektrisch isolierendem Material besteht und wie das erste Gehäuse 205 formstabil ist. Wie Fig.15 zeigt, ist außen an das zweite Gehäuse 214 auf etwa halber Länge ein Ringbund angeformt, der mit einer nach außen offenen Ringnut 214' versehen ist, in der ein O-Ring 212 liegt.

An diesen Ringbund schließt sich einerseits derjenige Abschnitt des zweiten Gehäuses 214 an, der bei Herstellung der Steckverbindung auf seiner gesamten Länge in das erste Gehäuse 205 eingeführt wird. Er erstreckt sich im vollständig eingeführten Zustand bis nahe an den Boden des ersten Gehäuse 205 und deshalb ein Stück weit über das freie Ende der Kontaktzungen 209' hinaus. Der für den Eingriff in das erste Gehäuse 205 bestimmte Abschnitt des zweiten Gehäuses 214 hat einen an den Innendurchmesser des ersten Gehäuses 205 angepaßten Außendurchmesser und außerdem einen in einer Radialebene liegenden Boden mit einer zentralen Durchtrittsöffnung für den Bolzen 202. Dieser Teil des zweiten Gehäuses 214 ist deshalb, wenn er in das erste Gehäuse 205 vollständig eingeführt ist, praktisch spielfrei am ersten Gehäuse 205 abgestützt, wodurch zuverlässig äußere Krafteinwirkungen vom Kontaktsystem ferngehalten werden.

Der bei hergestellter Steckverbindung außerhalb des ersten Gehäuses 205 liegende Teil des zweiten Gehäuses 214 übergreift den Endabschnitt der Isolation des Kabels 211 und stützt sich an einem auf die Isolation des Kabels 211 aufgebrachten Dichtungsring 263 ab.

Für eine formschlüssige Verbindung zwischen dem zweiten Gehäuse 214 und der Kontaktbuchse 209 ist auf die Sechskantverpressung 208 des Mittelabschnitts der Kontaktbuchse 209 ein offener Verbindungsring 264 aufgeklipst, der aus Kunststoff besteht und dessen Innenprofil an das Außenprofil der Sechskantverpressung 208 angepaßt ist. Der Verbindungsring 264 bildet eine nach außen offene Ringnut, in die wenigstens zwei an die Innenwand des zweiten Gehäuses 214 angeformte Vorsprünge 265 in axialer Richtung formschlüssig eingerastet werden. Damit ist das zweite Gehäuse 214 formschlüssig und zumindest im wesentlichen spielfrei mit der Kontaktbuchse 209 verbunden.

Außer dem zweiten Gehäuse 214 weist der Steckerteil noch eine Kappe 215 auf, die im Ausführungsbeispiel ebenfalls aus einem Isoliermaterial besteht. Sie könnte aber auch aus Metall bestehen, was vor allem dann in Frage kommt, wenn ein geschirmtes Kabel verwendet wird und der Schirm im Bereich der Steckverbindung geerdet werden muß. Die Kappe 215 weist an ihrem einen Ende eine Öffnung für den Durchtritt des Kabels 211 auf und im Anschluß an diese Öffnung eine konische Innenfläche, mit der sie den Dichtungsring 263 sowohl gegen die Isolation des Kabels 211 als auch gegen eine Innenkonusfläche am Ende des zweiten Gehäuses 214 preßt. Letzteres ist deshalb hier fluiddicht und elektrisch dicht verschlossen. Außerdem wird eine gute Zugentlastung erreicht.

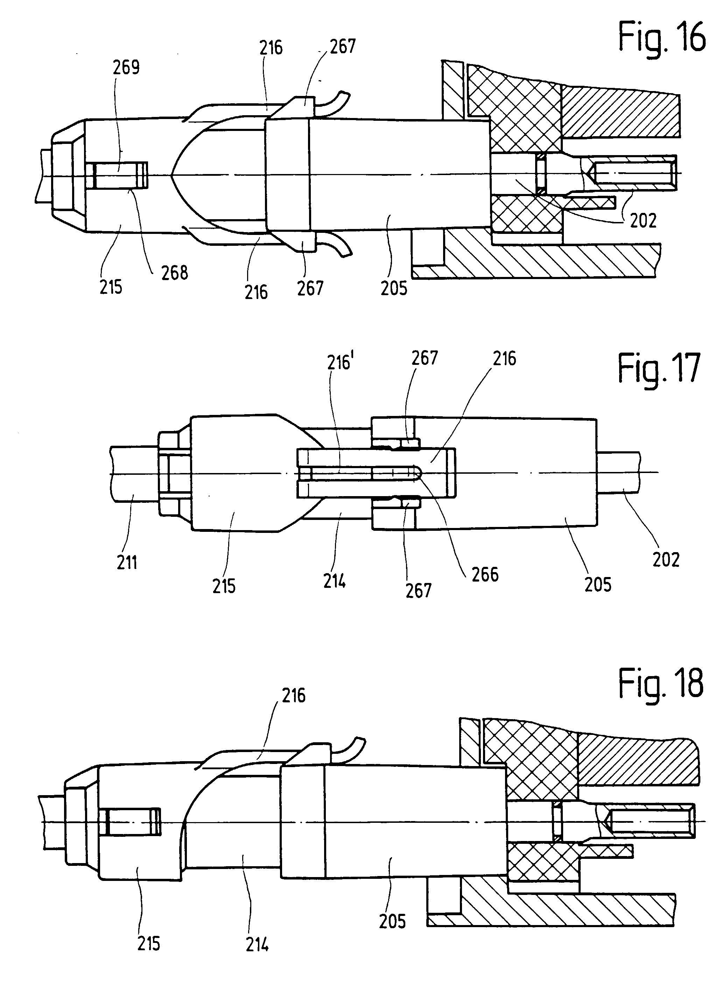

Die Kappe 215 übergreift den bei hergestellter Steckverbindung außerhalb des ersten Gehäuses 205 liegenden Teil des zweiten Gehäuses 214 spielfrei dank einer konischen Außenmantelfläche des zweiten Gehäuses 214 in dem von der Kappe 215 übergriffenen Endabschnitt und einer entsprechenden konischen Innenmantelfläche der Kappe 215. Wie insbesondere Fig.16 erkennen läßt, weist die Kappe 215 zwei diametral angeordnete, in axialer Richtung verlaufende, radial federnde Laschen 216 auf, welche bei hergestellter Steckverbindung das erste Gehäuse 205 übergreifen und mit diesem eine in axialer Richtung formschlüssige Rastverbindung herstellen. Zu diesem Zwecke sind außen an das erste Gehäuse 205 in zwei diametral gegenüberliegenden Bereichen je eine radial abstehende Nase 266 und zu beiden Seiten derselben zwei gegeneinanderweisende und gegeneinanderfedernde Haken 267 angeformt. Wie Fig.17 zeigt, greift die Nase 266 in einen mittigen Längsschlitz 216' der Lasche 216 ein. Die beiden seitlichen Randzonen der Lasche 216 werden von den Haken 267 übergriffen, wodurch die Nase 266 und die Lasche 216 in Eingriff miteinander gehalten werden. Hierdurch wird sichergestellt, daß das zweite Gehäuse 214 sich nicht aus dem ersten Gehäuse 205 ungewollt herausbewegen kann. Die Steckverbindung ist deshalb auch rüttelsicher.
Die Eindringtiefe des zweiten Gehäuses 214 in das erste Gehäuse 205 wird von einer Schulter begrenzt, die nahe dem offenen Ende des ersten Gehäuses 205 durch eine stufenförmige Vergrößerung von dessen Innendurchmesser gebildet ist und eine Anschlagfläche für die Ringschulter des zweiten Gehäuses 214 bildet. Da dann, wenn der Ringbund in Anlage an der genannten Schulter des ersten Gehäuses 205 ist, der O-Ring 212 dicht an der Innenmantelfläche des ersten Gehäuses 205 anliegt, ist weiterhin durch die Rastverbindung zwischen der Kappe 215 und dem ersten Gehäuse 205 ein fluiddichter und elektrisch dichter Verschluß des ersten Gehäuses 205 gewährleistet.

Zwei gegenüber den Laschen 216 in Umfangsrichtung versetzt angeordnete Durchbrüche 268 der Kappe 215 dienen der Aufnahme je eines Vorsprunges 269 des Gehäuses 214. Durch den Eingriff der Vorsprünge 269 in die Durchbrüche 268 wird die Kappe 215 nicht nur drehfest, sondern auch in axialer Richtung formschlüssig mit dem zweiten Gehäuse 214 verbunden.

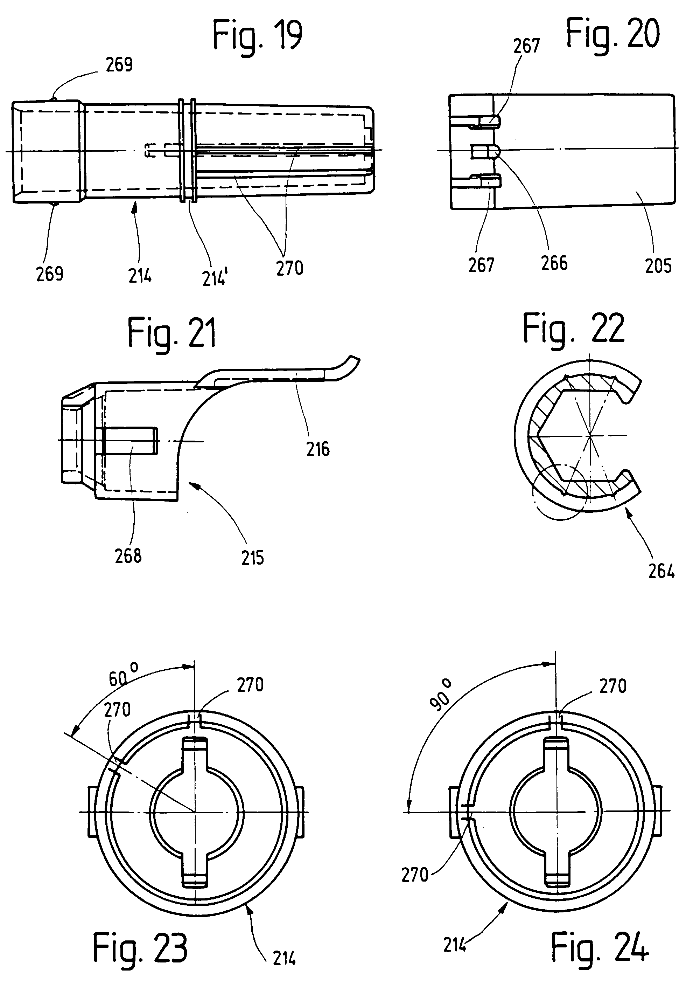

Wie die Fig.19 sowie 23 und 24 zeigen, können in der Außenmantelfläche des in Eingriff mit dem ersten Gehäuse 205 kommenden Abschnitts des zweiten Gehäuses 214 zwei Längsnuten 270 vorgesehen sein. Durch unterschiedliche Winkel, um welche die beiden Längsnuten 270 in Umfangsrichtung gegeneinander versetzt sind, kann man, wenn das erste Gehäuse 205 mit entsprechend angeordneten Vorsprüngen für den Eingriff in die Längsnuten 270 versehen ist, sicherstellen, daß nur ein bestimmter Steckerteil in den Buchsenteil eingesteckt werden kann, was beispielsweise dann wichtig ist, wenn Verbindungen in einem mehrphasigen System hergestellt werden müssen und deshalb eine phasenrichtige Verbindung sichergestellt sein muß. Die Längsnuten 270 und die mit ihnen zusammenwirkenden Vorsprünge des ersten Gehäuses 205 bilden also ein einfaches Kodierungssystem.

Wie die Fig.16 und 18 zeigen, kann der Bolzen 202 an seinem der Kontaktbuchse 209 abgewandten Ende als Preßhülse ausgebildet sein. Diese Preßhülse kann beispielsweise im Inneren eines Gerätes liegen, mit dem der Buchsenteil der Steckverbindung fest verbunden ist.

Ferner zeigen die Fig.18 und 21, daß die Kappe 215 auch mit einer einzigen Lasche 216 ausgeführt sein kann, sofern die zu übertragenden Kräfte den Verzicht auf eine zweite Lasche ermöglichen.

Die im folgenden erläuterten und dargestellten Ausführungsbeispiele sollen vor allem aufzeigen, daß das Konstruktionsprinzip, welches der Steckverbindung gemäß den Fig.15 bis 24 zugrundeliegt, an unterschiedliche Anforderungen problemlos angepaßt werden kann, ohne dadurch seine Vorzüge zu verlieren.

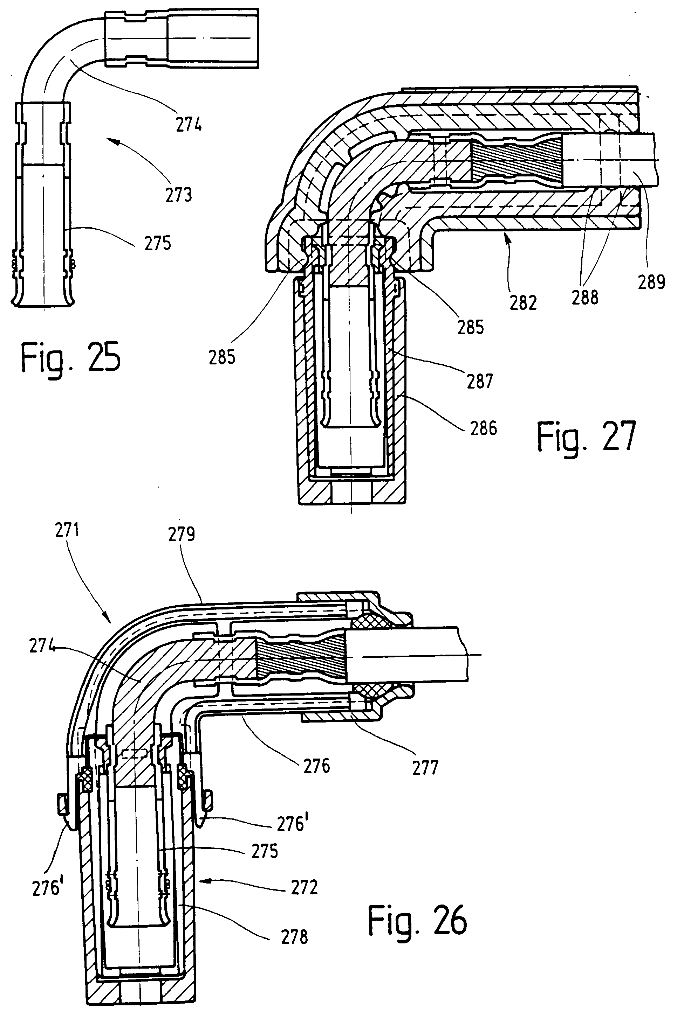

So kann beispielsweise, wie die Fig.25 und 26 zeigen, der Steckerteil als Winkelstecker 271 ausgebildet sein, der einem geraden Steckbuchsenteil 272 zugeordnet ist. Das Kontaktsystem besteht aus einem nicht dargestellten Bolzen des Steckbuchsenteils 272 und einer Kontaktbuchse 273 des Winkelsteckerteils 271. Von der Kontaktbuchse 209 unterscheidet sich die Kontaktbuchse 273 nur dadurch, daß sie zwei voneinander getrennte Abschnitte aufweist, die mit dem einen bzw. anderen Schenkel eines rechtwinkligen Einlegeteils 274 verpreßt sind. Der eine Abschnitt bildet die Kontaktzungen 275, der andere die Preßhülse für die Verbindung mit der Seele des Kabels. Ein weiterer Unterschied besteht darin, daß an den abgewinkelten Teil 276 des Winkelsteckers 271 Rastzungen 276' angeformt sind, mittels deren eine formschlüssige Verbindung mit dem Gehäuse des Buchsenteils 272 herstellbar ist. Die Kappe 277 braucht deshalb nur einen Endabschnitt des Teils 276 des zweiten Gehäuses zu übergreifen. Infolge der Winkelform der Kontaktbuchse 273 besteht das zweite Gehäuse des Winkelsteckers 271 aus drei Teilen, nämlich dem in das Gehäuse des Steckbuchsenteils 272 einsteckbaren Abschnittes 278, welcher in gleicher Weise wie das zweite Gehäuse 214 formschlüssig mit der Kontaktbuchse 273 verbunden ist, sowie zwei Halbschalen 279, welche den Teil 276 bilden, fest miteinander verbunden sind sowie den Einlegeteil 274 und den die Preßhülse bildenden Endabschnitt der Kontaktbuchse 273 aufnehmen. Die Kappe 277 verschließt das kabelseitige Ende des aus den beiden Halbschalen 279 gebildeten Teils 276 des zweiten Gehäuses. Die den Laschen 216 entsprechenden Laschen 276' sind an die beiden Halbschalen 279 angeformt. Sie hintergreifen im Ausführungsbeispiel den Steg je eines Bügels.

Sofern ein Gehäuse des erfindungsgemäßen Verbindungssystems aus zwei Halbschalen zusammengesetzt sein muß, ist es zweckmäßig, die Halbschalen durch ein Filmscharnier 281 miteinander zu verbinden, so daß beide Halbschalen gleichzeitig hergestellt und besonders einfach zu dem Gehäuse zusammengefügt werden können. Eine Winkelsteckverbindung mit einem derartigen Gehäuse zeigen die Fig.27 bis 32. Von dem Ausführungsbeispiel gemäß Fig.26 unterscheidet sich dieses Ausführungsbeispiel nur durch das als Ganzes mit 282 bezeichnete Winkelgehäuse, weshalb im folgenden nur dieses erläutert ist.

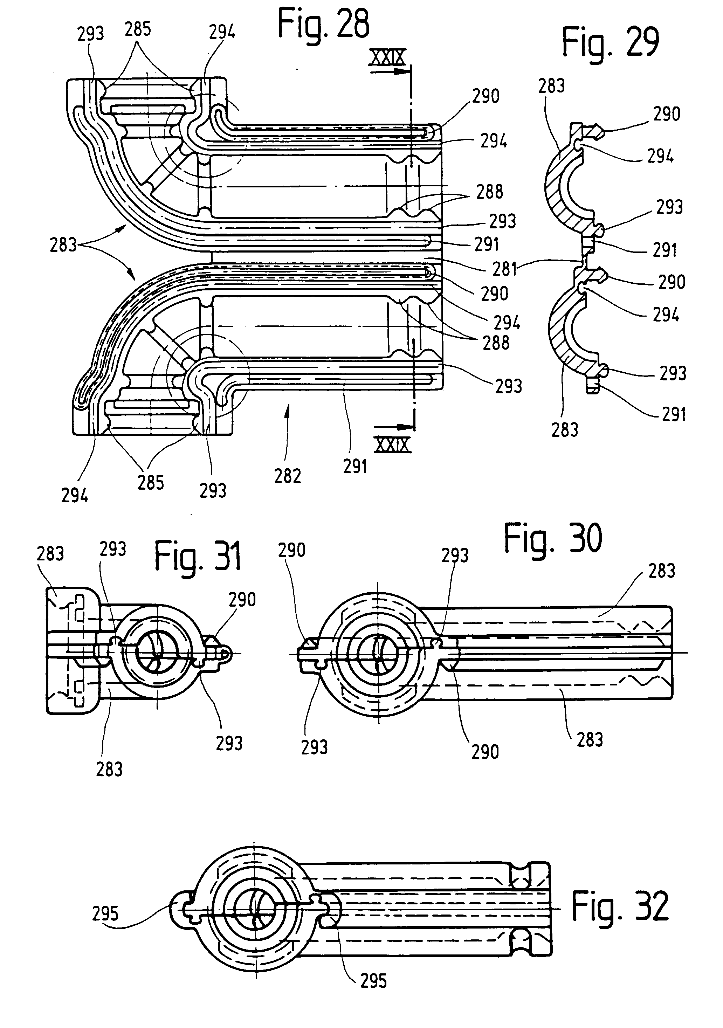

Wie Fig.28 zeigt, sind die beiden Halbschalen 283 spiegelbildlich gleich ausgebildet. Nahe dem einen Ende des von den beiden Halbschalen 283 gebildeten Aufnahmekanals für die Kontaktbuchse, welche wie die Kontaktbuchse 273 ausgebildet ist, ist ein radial nach innen vorspringender Ringwulst 285 vorgesehen, welcher in eine korrespondierende Ringnut des in das erste Gehäuse 286 einführbaren Gehäuseteils 287 eingreift, der sich nicht wesentlich von dem in das erste Gehäuse 205 eingreifenden Teil des zweiten Gehäuses 214 unterscheidet. Am anderen Ende des zentralen Kanals sind zwei radial nach innen vorspringende Ringwulste 288 angeformt, welche mit der erforderlichen Kraft an die Isolation des Kabels 289 angepreßt werden, wenn die beiden Halbschalen 283 miteinader verrastet sind. Längs des zentralen Kanales sind an die beiden Halbschalen pilzförmige Rastelemente 290 angeformt, welche in je eine Öffnung 291 der anderen Halbschale einrasten und dadurch beide Halbschalen mechanisch fest zusammenhalten. Ferner sind an die beiden Halbschalen 283 sich längs des gesamten zentralen Kanals 292 erstreckende, im Profil pilzkopfförmige Dichtungsrippen 293 angeformt, welche in korrespondierend ausgebildete Nuten 294 der anderen Halbschale eingreifen und dadurch die Teilungsfuge fluiddicht und elektrisch dicht verschließen.

Wie Fig.32 zeigt, kann man statt der pilzkopfförmigen Rastelemente 290 beispielsweise auch hakenförmige Rastelemente 295 vorsehen, welche den Rand der anderen Halbschale übergreifen.

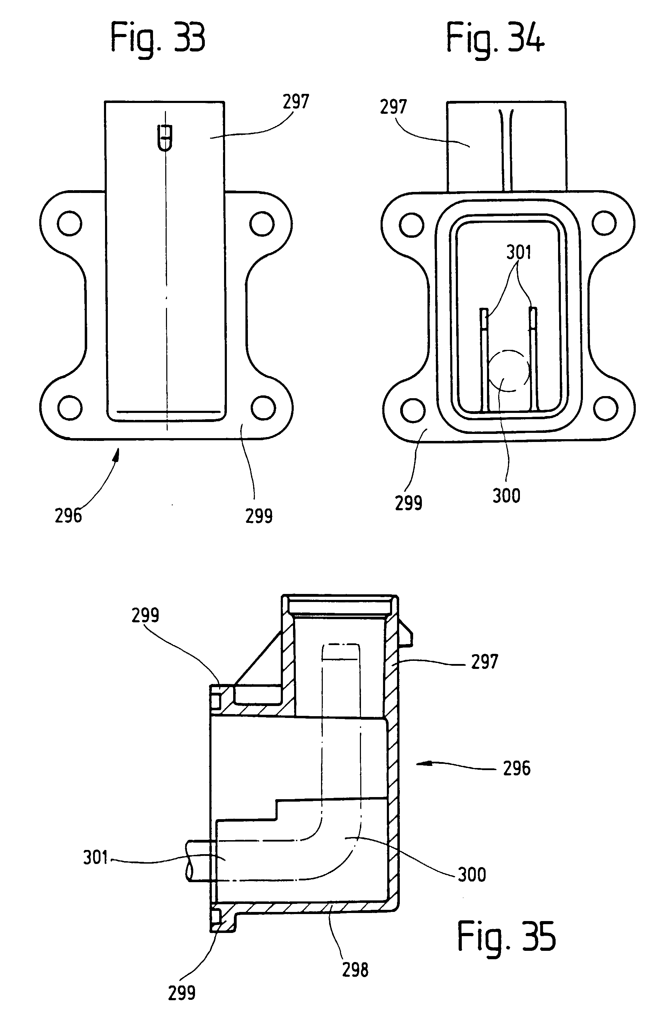

Die Fig.33 bis 35 zeigen, daß auch der Buchsenteil einer Steckverbindung statt einer geraden Form eine Winkelform haben kann. Der die Kontaktbuchse enthaltende Abschnitt des Gehäuses des zugehörigen Steckerteils wird in den mit 297 bezeichneten Teil des Gehäuses 296 eingesteckt, wie dies in Verbindung mit dem Ausführungsbeispiel gemäß Fig.15 beschrieben worden ist. Unterschiedlich zu dem Ausführungsbeispiel gemäß Fig.15 ist also nur, daß sich an den Teil 297 im rechten Winkel ein Teil 298 anschließt, an den im Ausführungsbeispiel ein Flansch 299 angeformt ist, und daß der Bolzen 300 durch den Teil 298 hindurch aus dem Gehäuse 296 austritt und dabei seitlich an Wänden 301 anliegt, welche an das Gehäuse 296 angeformt sind.

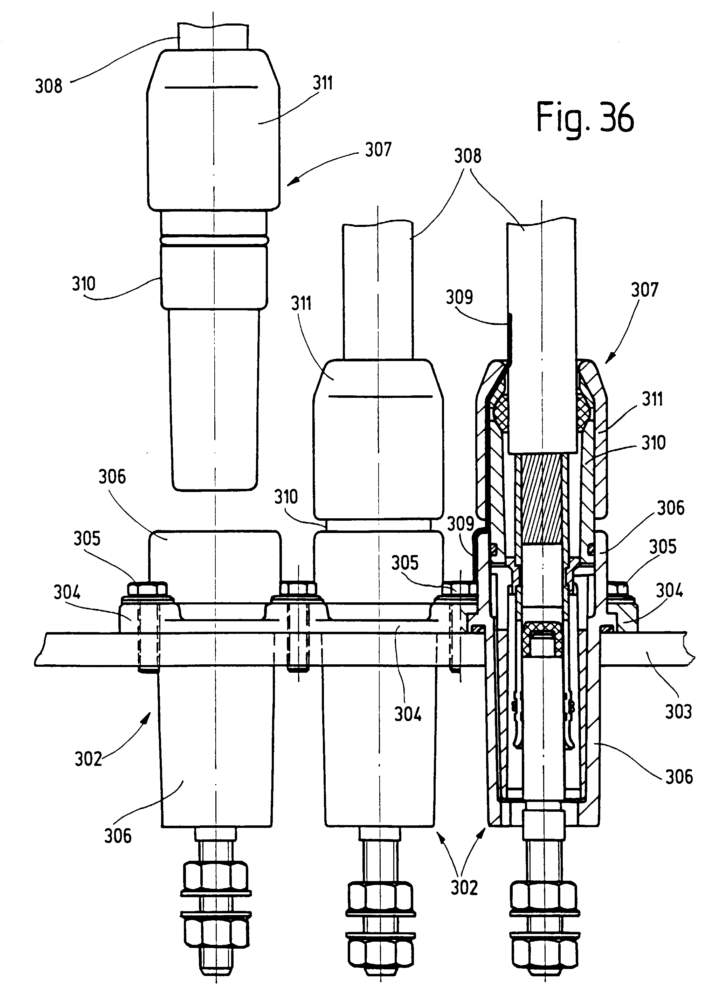

Es ist problemlos möglich, mehrere Steckverbindungen zu einer Gruppe zusammenzufassen, um beispielsweise eine mehrphasige Verbindung herstellen zu können. Bei dem in Fig.36 dargestellten Ausführungsbeispiel sind drei gleich ausgebildete Steckbuchsenteile 302 in eine Trägerplatte 303 eingesetzt und mit dieser mittels eines Verbindungsflansches 304 und Schrauben 305 fest verbunden. Für die Auflage des Verbindungsflansches 304 ist an das Gehäuse 306 jedes Steckbuchsenteils 302 ein Ringflansch angeformt, der sich über eine Ringdichtung auf der Trägerplatte 303 abstützt. Im übrigen unterscheiden sich die gleich ausgebildeten Steckbuchsenteile 302 nicht wesentliche von dem Steckbuchsenteil gemäß Fig.15.

In jeden Steckbuchsenteil 302 ist ein Steckerteil 307 einsteckbar. Diese Steckerteile 307 sind gleich ausgebildet und unterscheiden sich nicht wesentlich von dem Steckerteil gemäß Fig.15. Allerdings ist insofern ein Unterschied vorhanden, als die Kabel 308 ein Schirmgewebe 309 aufweisen, das zwischen dem elektrisch isolierenden Gehäuse 310 des Steckerteils 307 und der das Gehäuse 310 ein Stück weit übergreifenden Kappe 311 hindurch zu den Schrauben 305 geführt und über diese geerdet ist. Vorteilhafterweise besteht hierbei die Kappe 311 aus Metall.

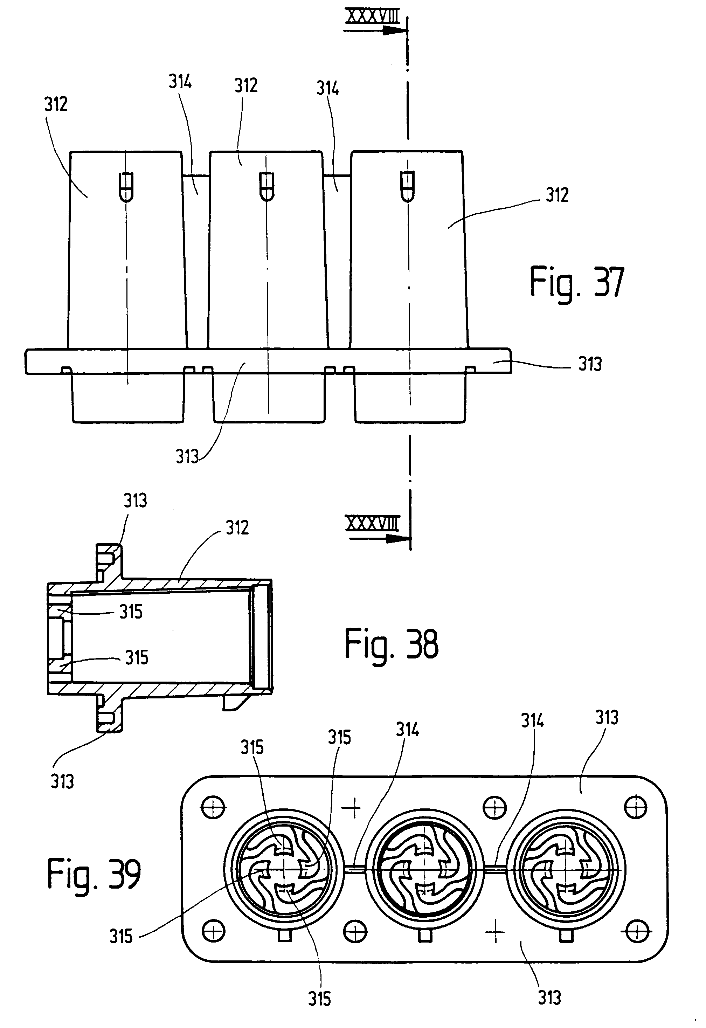

Wie die Fig.37 bis 39 zeigen, kann man für eine mehrphasige Verbindung die Gehäuse 312 der Steckbuchsenteile zusammenhängend, und zwar im Bedarfsfalle auch einstückig mit einem Befestigungsflansch 313, ausbilden. Im Ausführungsbeispiel sind deshalb die Gehäuse 312 nicht nur über den Befestigungsflansch 313 miteinander verbunden, sondern auch über je einen Steg 314.

Eine Besonderheit dieser dreipoligen Steckbuchse zeigen die Fig.38 und 39. Der in jedem Gehäuse 312 anzuordnende, nicht dargestellte Bolzen wird nicht in eine zentrale Öffnung des Gehäusebodens eingepreßt. Vielmehr wird er von mehreren, im Ausführungsbeispiel vier radial federnden Fingern 315 festgehalten, die in eine Ringnut des Bolzens eingreifen und dadurch diesen gegen eine Längsverschiebung relativ zum Gehäuse 312 sichern.

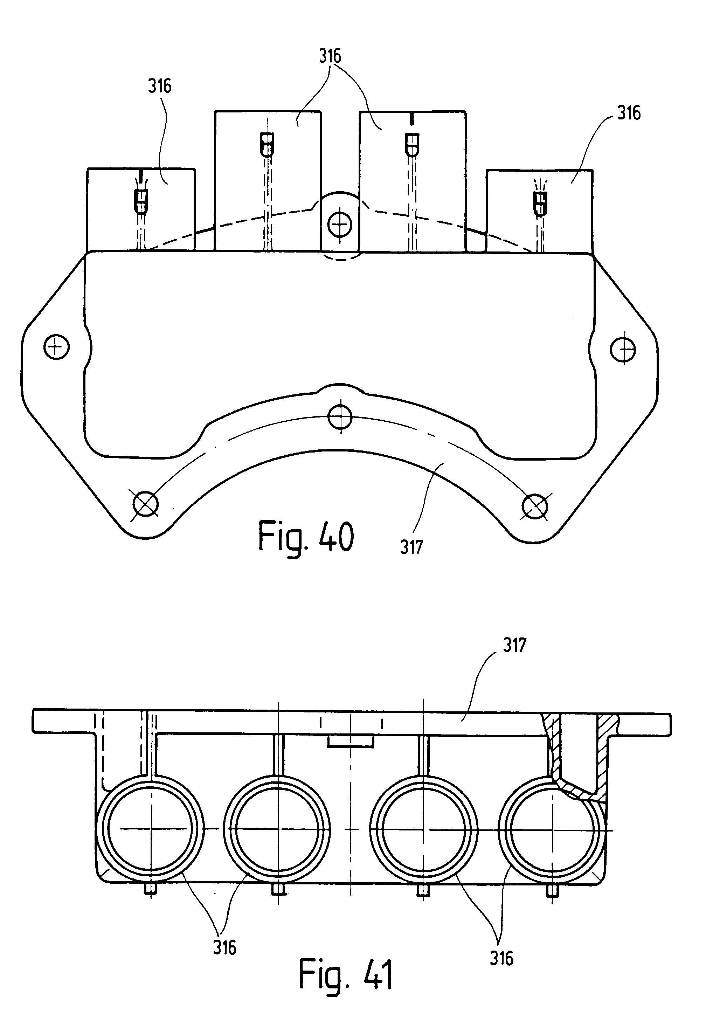

Wie bei Einzelsteckverbindungen kann auch bei mehrpoligen Steckverbindungen der Buchsenteil Winkelsteckbuchsen bilden. Die Anordnung der einzelnen Winkelsteckbuchsen bei der in Fig.40 dargestellten, vierpoligen Winkelsteckbuchse ist mit der Anordnung gemäß Fig.4 vergleichbar. Die Gehäuseteile 316, in welche je einer der Steckerteile einzustecken ist, liegen mit ihrer Längsachse in einer zum gemeinsamen Befestigungsflansch 317 parallelen Ebene. In Richtung ihrer Längsachse sind jedoch die beiden mittleren Gehäuseteile 316 gegenüber den beiden äußeren Gehäuseteilen 316 versetzt, weil, wie bei dem Ausführungsbeispiel gemäß Fig.4, der in axialer Richtung verlaufende Schenkel jedes Bolzens, dessen anderer Schenkel im Zentrum des zugeordneten Gehäuseteils 316 liegt, einen vorgegebenen Abstand von einer zentralen Längsachse aufweisen soll.

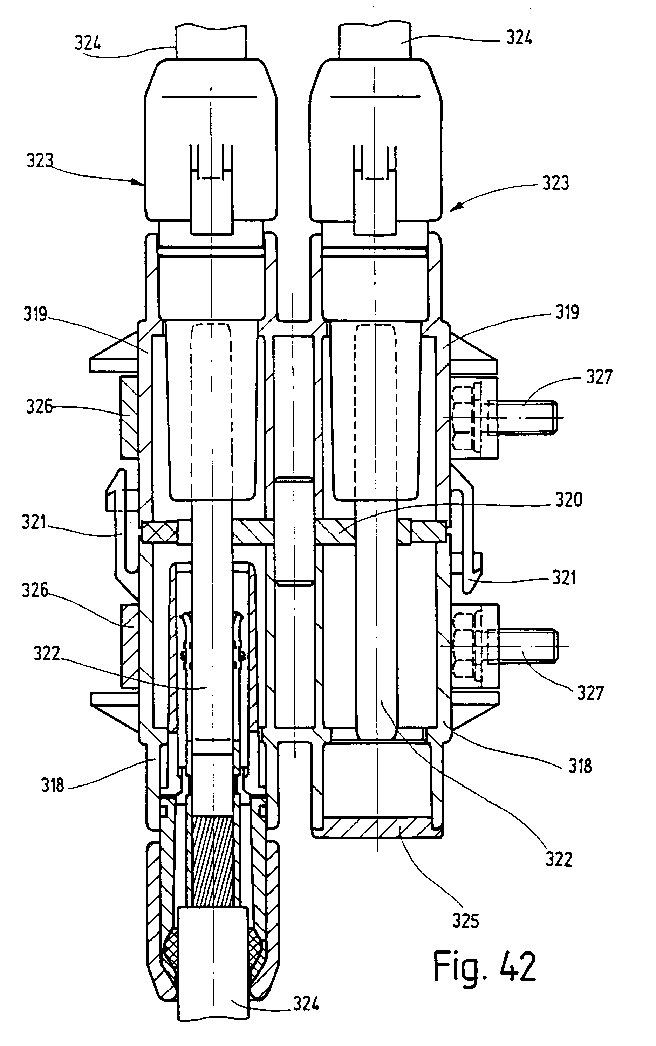

Ein weiteres Beispiel für die große Anpassungsfähigkeit des erfindungsgemäßen Verbindungssystems zeigt die in Fig.42 dargestellte mehrpolige Verbindungseinrichtung, bei der sämtliche Pole elektrisch leitend miteinander verbunden sind. Wie Fig.42 zeigt, ist ein erstes Steckbuchsenpaar an dem den zugehörigen Steckerteilen abgekehrten Ende seiner beiden gleichen und einstückig ausgebildeten Gehäuse 318 mit den ebenfalls gleich und einstückig miteinander ausgebildeten Gehäusen 319 eines zweiten Steckbuchsenpaares derart verbunden, daß je eines der Gehäuse 318 mit einem der Gehäuse 319 fluchtet. Zwischen die beiden Gehäusepaare ist eine Kontaktschiene 320 eingespannt, die gegenüber den von Laschen 321 zusammengehaltenen Gehäusen 318 und 319 isoliert ist. Zwei in der Kontaktschiene 320 festgelegte Bolzen 322 ragen in gleichem Maße in die beiden miteinander fluchtenden Gehäuse 318 und 319 hinein und liegen in deren Längsachse. Die zugehörigen Steckerteile 323 haben im wesentlichen die gleiche Ausbildung wie der Steckerteil des Ausführungsbeispiels gemäß Fig.15. In Fig.42 sind drei dieser gleich ausgebildeten Steckerteile 323 dargestellt, welche in eines der beiden Gehäuse 318 bzw. die beiden Gehäuse 319 eingesteckt sind. Die isolierten Kabel 324, an deren Enden die Steckerteile 323 vorgesehen sind, sind deshalb alle miteinander elektrisch leitend verbunden. Die nicht belegte Steckbuchse ist mittels eines Verschlußdeckels 325 dicht verschlossen.

Sowohl das Gehäusepaar 318 als auch das Gehäusepaar 319 wird im Ausführungsbeispiel von je einem Bügel 326 übergriffen, mittels dessen sowie Schrauben 327 die gesamte Vorrichtung an einem Träger befestigt werden kann. Selbstverständlich kommen auch andere Befestigungsarten in Frage.

## Patentansprüche

1. Verbindungssystem für elektrische Leiter, mittels dessen mindestens eine Steckverbindung aus zwei zusammensteckbaren, einen Mehrlinienkontakt bildenden Kontaktelementen (2, 9; 9, 40, 41; 202, 209) herstellbar ist, wobei das eine Kontaktelement als Buchse (9; 209; 273) ausgebildet ist, und sich in Buchsenlängsrichtung erstreckende und in radialer Richtung federnde Zungen aufweist, das andere Kontaktelement (2; 202) in einem ersten elektrisch isolierenden Gehäuse (5; 205) angeordnet ist, die Buchse (9; 209) in einem zweiten elektrisch isolierenden Gehäuse (14; 214) angeordnet ist, und die beiden Gehäuse (5, 14; 205, 214) ineinander steckbar sind,
dadurch gekennzeichnet,
daß das andere Kontaktelement als Bolzen (2; 40, 41; 202) ausgebildet ist,
daß bei vollständig ineinandergesteckten Gehäusen (5, 14; 205, 214) diese fluiddicht und/oder elektrisch dicht verbunden sind,
daß die federnden Zungen mindestens je eine sich in Zungenlängsrichtung erstreckende und radial nach innen vorspringende, einen Linienkontakt ergebende Materialpartie (60) aufweisen,
und daß die Materialpartie (60) durch die Längsränder (60) der Zungen (9'; 209'; 275) gebildet ist.

2. Verbindungssystem nach Anspruch 1, dadurch gekennzeichnet, daß an die Zungen (9'; 209'; 275) nach außen überstehende Vorsprünge (58; 262) angeformt sind, welche eine die Buchse (9; 209) im Bereich der Zungen (9'; 209'; 275) umfassende Feder (61; 261) mit radial nach innen gerichteter Federkraft gegen eine axiale Verschiebung sichern.

3. Verbindungssystem nach einem der Ansprüche 1 oder 2, dadurch gekennzeichnet, daß das die Buchse (9; 209) enthaltende Gehäuse (14; 214) über nahezu der gesamten Länge des den Bolzen (2; 202) enthaltenden Gehäuses (5; 205) in letzteres unter Anlage an diesen einführbar ist.

4. Verbindungssystem nach einem der Ansprüche 1 bis 3, gekennzeichnet durch eine das hintere, bei hergestellter Steckverbindung außerhalb des einen Gehäuses (5; 205) liegende Ende des anderen Gehäuses (14; 214) übergreifende Kappe (15; 215; 277) mittels deren letzteres (14; 214) unter Zwischenlage eines Dichtungselementes (13; 263) fluiddicht und/oder elektrisch dicht verschließbar ist.

5. Verbindungssystem nach Anspruch 4, dadurch gekennzeichnet, daß die Kappe (15; 215) mit wenigstens einer in radialer Richtung flexiblen Lasche (16; 216) versehen ist, welche bei hergestellter Steckverbindung zumindest indirekt mit dem Gehäuse (5; 205) für den Bolzen (2; 202) verbindbar ist.

6. Verbindungssystem nach Anspruch 4 oder 5, dadurch gekennzeichnet, daß die Kappe (15; 215) und der von ihr übergriffene Bereich des Gehäuses (14; 214) für die Buchse (9; 209) wenigstens je ein Positionierelement (268, 269) aufweisen, die bei vollständig auf das Gehäuse (14; 214) für die Buchse (9; 209) aufgesetzter Kappe (15; 215) in Eingriff miteinander sind.

7. Verbindungssystem nach einem der Ansprüche 1 bis 6, dadurch gekennzeichnet, daß das Gehäuse (205) für den Bolzen (202) und das Gehäuse (214) für die Buchse (209) mit zusammenwirkenden Kodierelementen (270) versehen sind.

8. Verbindungssystem nach Anspruch 7, dadurch gekennzeichnet, daß die Kodierungselemente des einen Gehäuses (214) durch wenigstens zwei Längsnuten (270) in der Außenmantelfläche und diejenigen des anderen Gehäuses (205) durch wenigstens zwei Vorsprünge gebildet sind.

9. Verbindungssystem nach einem der Ansprüche 1 bis 8, dadurch gekennzeichnet, daß das aus Kunststoff bestehende Gehäuse (282, 287) für die Buchse (273) wenigstens zum Teil aus zwei durch ein flexibles Scharnier (281) miteinander verbundene und durch angeformte Klipselemente (290, 291, 295) zusammenhaltbaren Teilen (283) besteht.

10. Verbindungssystem nach Anspruch 9, dadurch gekennzeichnet, daß an die Teile (283) Dichtungselemente (293, 294) angeformt sind, welche die Teilungsfuge dicht verschließen.

11. Verbindungssystem nach einem der Ansprüche 1 bis 10, dadurch gekennzeichnet, daß an das aus Kunststoff bestehende Gehäuse (312) für den Bolzen radial federnde und alle in der gleichen Radialebene liegende Arme (215) für den Eingriff in eine Ringnut des Bolzens angeformt sind.

12. Verbindungssystem nach einem der Ansprüche 1 bis 11, dadurch gekennzeichnet, daß das Gehäuse (269; 306; 312; 316) für den Bolzen einen Befestigungsflansch (299; 313; 317) aufweist.

13. Verbindungssystem nach Anspruch 12, dadurch gekennzeichnet, daß wenigstens zwei Gehäuse (306; 312; 316) an einem einzigen Befestigungsflansch (313; 317) vorgesehen sind.

14. Verbindungssystem nach Anspruch 12 oder 13, gekennzeichnet durch wenigstens einen den Befestigungsflansch übergreifenden Verbindungsflansch (304) aus Metall, mit dem ein Kabelschirm (309) elektrisch verbindbar ist.

15. Verbindungssystem nach einem der Ansprüche 1 bis 14, dadurch gekennzeichnet, daß das Gehäuse (312; 316) für den Bolzen und/oder das Gehäuse für die Buchse Teile einer mehrpoligen Baueinheit sind.

16. Verbindungssystem nach Anspruch 15, dadurch gekennzeichnet, daß die Baueinheit fluiddicht mit einem Gerät verbindbar ist.

## Claims

1. Connection system for electrical conductors, whereby at least one plug-and-socket connection can be produced from two interengageable multi-line contact elements (2, 9; 9, 40, 41; 202, 209), where one contact element is in the form of a sleeve (9; 209; 273) and has tongues which extend in the longitudinal direction of the sleeve and flex in the radial direction, and the other contact element (2; 202) is arranged in a first electrically insulating enclosure (5; 205), the sleeve (9; 209) being arranged in a second electrically insulating enclosure (14; 214), and the two enclosures (5, 14; 205, 214) being adapted to be engaged one with the other,
characterised in that
the other contact element is in the form of a pin (2; 40, 41; 202),
when the enclosures (5, 14; 205, 214) are fully engaged one with the other they are connected in a fluid-tight and/or electrically impervious manner,
the resilient tongues each have at least one portion of material (60) which extends in the longitudinal direction of the tongue and projects radially inwards to make a line contact,
and the portion of material (60) is formed by the longitudinal edges (60) of the tongues (9'; 209', 275).

2. Connection system according to claim 1, characterised in that outwardly protruding projections (58; 262) are formed on the tongues (9'; 209'; 275), which projections prevent a spring (61; 261) from being axially displaced, which spring has a radially inwardly directed spring force and encompasses the sleeve (9; 209) in the region of the tongues (9'; 209'; 275).

3. Connection system according to either of claims 1 or 2, characterised in that the enclosure (14; 214) which contains the sleeve (9; 209) is adapted to be inserted, over almost the entire length of the enclosure (5; 205) containing the pin (2; 202), into said enclosure (5; 205) so as to make contact with the pin.

4. Connection system according to any of claims 1 to 3, characterised by a cap (15; 215; 277) which, on formation of the plug-and-socket connection, fits over the back end of one enclosure (14; 214), which end is situated outside the other enclosure (5; 205), and by means of said cap (15; 215; 277) said one enclosure (14; 214) can be sealed in a fluid-tight and/or electrically impervious manner by the interposition of a sealing element (13; 263).

5. Connection system according to claim 4, characterised in that the cap (15; 215) is provided with at least one tab (16; 216) which is flexible in the radial direction and which can be connected at least indirectly to the enclosure (5; 205) for the pin (2; 202) on formation of the plug-and-socket connection.

6. Connection system according to claim 4 or 5, characterised in that the cap (15; 215), and the region over which it fits on the enclosure (14; 214) for the sleeve (9, 209), respectively have at least one positioning element (268, 269) which are in engagement with one another once the cap (15; 215) has been placed fully onto the enclosure (14; 214) for the sleeve (9; 209).

7. Connection system according to any of claims 1 to 6, characterised in that the enclosure (205) for the pin (202) and the enclosure (214) for the sleeve (209) are provided with cooperating coding elements (270).

8. Connection system according to claim 7, characterised in that the coding elements of one enclosure (214) are formed by at least two longitudinal slots (270) in the external casing surface and those of the other enclosure (205) are formed by at least two projections.

9. Connection system according to any of claims 1 to 8, characterised in that at least part of the plastics enclosure (282, 287) for the sleeve (273) is formed from two parts (283) joined to one another by a flexible hinge (281) and adapted to be held together by clip elements (290, 291, 295) formed thereon.

10. Connection system according to claim 9, characterised in that sealing elements (293, 294) which tightly seal the joint are formed on the parts (283).

11. Connection system according to any of claims 1 to 10, characterised in that radially flexing arms (215), all of which are situated in the same radial plane, are formed on the plastics enclosure (312) for the pin, for engagement into an annular slot in the pin.

12. Connection system according to any of claims 1 to 11, characterised in that the enclosure (269; 306; 312; 316) for the pin comprises a fixing flange (299; 313, 317).

13. Connection system according to claim 12, characterised in that at least two enclosures (306; 312; 316) are provided on a single fixing flange (313; 317).

14. Connection system according to claim 12 or 13, characterised by at least one connecting flange (304) made of metal which fits over the fixing flange and to which a cable shield (309) can be electrically connected.

15. Connection system according to any of claims 1 to 14, characterised in that the enclosure (312; 316) for the pin and/or the enclosure for the sleeve are parts of a multipole constructional unit.

16. Connection system according to claim 15, characterised in that the constructional unit is adapted to be connected in a fluid-tight manner to an item of equipment.

## Revendications

1. Système de connexion pour conducteurs électriques au moyen duquel on peut réaliser au moins une connexion enfichable à partir de deux éléments de contact (2, 9 ; 9, 40, 41 ; 202, 209) enfichables ensemble, formant un contact multilinéaire, dans lequel le premier élément de contact est conçu sous forme d'une douille (9; 209 ; 273) et présente des languettes s'étendant selon la direction longitudinale de la douille et élastiques selon la direction radiale, l'autre élément de contact (2 ;202) est disposé dans une première enveloppe électriquement isolante (5 ; 205), la douille (9 ; 209) est disposée dans une seconde enveloppe électriquement isolante (14; 214) et les deux enveloppes (5, 14 ; 205, 214) peuvent s'enficher l'une dans l'autre,
caractérisé par le fait
que l'autre élément de contact est conçu sous forme d'une tige (2 ; 40, 41 ; 202),
que, les enveloppes (5, 14 ; 205, 214) étant complètement enfichées l'une dans l'autre, elle sont reliées avec étanchéité au fluide et/ou avec isolation électrique,
que les languettes élastiques présentent chacune au moins une portion de matériau (60) qui s'étend selon la direction longitudinale des languettes, fait saillie radialement vers l'intérieur et donne un contact linéaire,
et que la portion de matériau (60) est formée par les bords longitudinaux (60) des languettes (9' ; 209' ; 275).

2. Système de connexion selon la revendication 1, caractérisé par le fait que sur les languettes (9' ; 209' ; 275) sont formées des saillies (58 ; 262) qui dépassent vers l'extérieur et qui assurent à l'égard d'un coulissement axial un ressort (61 ; 261), à force élastique orientée radialement vers l'intérieur, qui enserre la douille (9 ; 209) dans la zone des languettes (9' ; 209' ; 275).

3. Système de connexion selon l'une des revendications 1 ou 2, caractérisé par le fait que l'enveloppe (14 ;214) contenant la douille (9 ; 209) peut s'introduire, sur presque toute la longueur de l'enveloppe (5 ;205) contenant la tige (2 ; 202), dans cette enveloppe, en s'appuyant contre elle.

4. Système de connexion selon l'une des revendications 1 à 3, caractérisé par un capuchon arrière (15 ; 215 ; 277) qui, la connexion enfichable étant réalisée, saisit, par dessus, l'extrémité de l'autre enveloppe (14 ; 214) située à l'extérieur de la première enveloppe (5 ; 205) et au moyen duquel cette dernière enveloppe (14 ; 214) peut, avec interposition d'un élément d'étanchéité (13 ; 263), s'obturer avec étanchéité au fluide et/ou isolation électrique.

5. Système de connexion selon la revendication 4, caractérisé par le fait que le capuchon (15 ; 215) comporte au moins une patte (16 ; 216) qui est flexible selon la direction radiale et qui, la connexion enfichable étant réalisée, peut se relier, au moins indirectement, avec l'enveloppe (5 ; 205) prévue pour la tige (2 ; 202).

6. Système de connexion selon la revendication 4 ou 5, caractérisé par le fait que le capuchon (15 ; 215) et la zone de l'enveloppe (14 ; 214) de la douille (9 ; 209) qui est saisie, par dessus, par le capuchon, présentent au moins chacun un élément de positionnement (268, 269) qui, le capuchon (15; 215) étant complètement posé sur l'enveloppe (14 ; 214) de la douille (9 ; 209), viennent en prise l'un avec l'autre.

7. Système de connexion selon l'une des revendications 1 à 6, caractérisé par le fait que l'enveloppe (5 ; 205) prévue pour la tige (202) et l'enveloppe (214) prévue pour la douille (209) sont munies d'éléments de codage (270) qui collaborent.

8. Système de connexion selon la revendication 7, caractérisé par le fait que les éléments de codage de la première enveloppe (214) sont formés par au moins deux rainures longitudinales (270) dans la surface latérale extérieure et ceux de l'autre enveloppe (205), le sont par au moins deux saillies.

9. Système de connexion selon l'une des revendications 1 à 8, caractérisé par le fait que l'enveloppe (282, 287) constituée de plastique, pour la douille (273) est constituée, au moins en partie, de deux parties (283) qui sont réunies l'une à l'autre par l'intermédiaire d'une charnière flexible (281) et peuvent être maintenues ensemble par des éléments de clipsage (290, 291, 295) venus de moulage.

10. Système de connexion selon la revendication 9, caractérisé par le fait que sur les parties (283) sont formés des éléments d'étanchéité (293, 294) qui obturent de façon étanche les joints de division.

11. Système de connexion selon l'une des revendications 1 à 10, caractérisé par le fait que sur l'enveloppe (312), constituée de plastique, prévue pour la tige sont formés des bras (215), radialement élastiques et tous situés dans le même plan radial, pour venir en prise dans une rainure annulaire de la tige.

12. Système de connexion selon l'une des revendications 1 à 11, caractérisé par le fait que l'enveloppe (269 ; 306 ; 312 ; 316) prévue pour la tige présente un rebord de fixation (299 ; 313 ; 317).

13. Système de connexion selon la revendication 12, caractérisé par le fait qu'au moins deux enveloppes (306 ; 312 ; 316) sont prévues sur un unique rebord de fixation (313 ; 317).

14. Système de connexion selon la revendication 12 ou 13, caractérisé par au moins un rebord de liaison (304), en métal, qui saisit, par dessus, le rebord de fixation et avec lequel un écran de câble (309) peut être électriquement relié.

15. Système de connexion selon l'une des revendications 1 à 14, caractérisé par le fait que l'enveloppe (312 ; 316) prévue pour la tige et/ou l'enveloppe prévue pour la douille sont des parties d'un ensemble multipolaire.

16. Système de connexion selon la revendication 15, caractérisé par le fait que l'ensemble peut être relié à un appareil avec étanchéité au fluide.
